# EUROPEAN PATENT APPLICATION

(11) **EP 4 394 578 A1**
(43) Date of publication of application: **03.07.2024**
(21) Application number: 23814854.8
(22) Date of filing: 27.04.2023
(51) Int. Cl.: G06F 3/14

(54) **SCREEN MIRRORING DATA PROCESSING METHOD, ELECTRONIC DEVICE, AND STORAGE MEDIUM**

(30) Priority: 30.05.2022 CN 202210614478; 30.06.2022 CN 202210761523
(71) Applicant: Honor Device Co., Ltd., Shenzhen, Guangdong 518040 (CN)
(72) Inventor: SONG, Chuan, Shenzhen, Guangdong 518040 (CN); XU, Hui, Shenzhen, Guangdong 518040 (CN)
(74) Representative: Maiwald GmbH
(86) International application number: PCT/CN2023/091333
(87) International publication number: WO 2023/231668

(57) **Abstract**

This application provides a to-be-projected data processing method, an electronic device, and a storage medium, and relates to the field of screen projection technologies. During screen projection, when it is identified that a current scenario is a specific screen projection scenario (for example, a scenario of in-vehicle infotainment screen projection), and a subscribed application corresponding to the specific screen projection scenario is displayed in a foreground of a screen projection destination end, a frame of image in to-be-projected data may be determined. When the frame of image meets a frame discarding condition, the frame of image may be discarded and does not need to be transmitted. Because consecutive repeated frames of data may exist in the to-be-projected data in the specific screen projection scenario, through frame processing in the solution of this application, a repeated frame of image may not need to be transmitted to reduce Wi-Fi link burden generated during screen projection, thereby reducing power consumption.

## Description

This application claims priority to Chinese Patent Application No. 202210614478.8, filed with the China National Intellectual Property Administration on May 30, 2022 and entitled "METHOD FOR REDUCING POWER CONSUMPTION DURING SCREEN PROJECTION AND ELECTRONIC DEVICE", and claims priority to Chinese Patent Application No. 202210761523.2, filed with the China National Intellectual Property Administration on June 30, 2022 and entitled "TO-BE-PROJECTED DATA PROCESSING METHOD, ELECTRONIC DEVICE, AND STORAGE MEDIUM", which are incorporated herein by reference in their entireties.

### TECHNICAL FIELD

This application relates to the field of screen projection technologies, and in particular, to a to-be-projected data processing method, an electronic device, and a storage medium.

### BACKGROUND

Screen projection, also referred to as screen mirroring, wireless displaying, screen sharing, or the like, means pushing, in real time by using a specific technical method to a screen projection receiving device for playing, resources such as pictures displayed on a screen projection initiating device or audio played on the screen projection initiating device, allowing users to watch corresponding pictures and listen to corresponding audio on the screen projection receiving device. However, in some special screen projection scenarios, there is a large amount of to-be-projected data, which increases unnecessary Wi-Fi link burden, causing increased power consumption.

### SUMMARY

This application provides a to-be-projected data processing method, an electronic device, and a storage medium, to process a data frame generated during screen projection to reduce a network transmission bandwidth, thereby reducing power consumption.

To achieve the foregoing objective, the following technical solutions are used in this application.

According to a first aspect, this application provides a to-be-projected data processing method, and the method includes:
A screen projection source device establishes a screen projection connection to a screen projection destination device;
the screen projection source device identifies that foreground projected content of the screen projection destination device is updated to an interface of a first application;
the screen projection source device obtains first to-be-projected data corresponding to the first application;
the screen projection source device performs a preset algorithm for each frame of image in the first to-be-projected data, where the preset algorithm is: deleting a first frame of image from the first to-be-projected data when a similarity between the first frame of image and a second frame of image in the first to-be-projected data is greater than or equal to a preset similarity threshold, where the second frame of image includes N consecutive frames of images preceding the first frame of image, and N is a positive integer; and
the screen projection source device sends second to-be-projected data to the screen projection destination device, where the second to-be-projected data is to-be-projected data obtained after the preset algorithm is performed on the first to-be-projected data.

According to the to-be-projected data processing method provided in this embodiment of this application, during screen projection, when it is identified that a subscribed application is displayed in a foreground of a screen projection destination end, a frame of image in to-be-projected data may be determined. When the frame of image meets a frame discarding condition, the frame of image may be discarded and does not need to be transmitted. Because consecutive repeated frames of data may exist in the to-be-projected data in the specific screen projection scenario, a repeated frame of image may not be transmitted to reduce Wi-Fi link burden generated during screen projection, thereby reducing power consumption.

The first to-be-projected data may be data processed by an encoder.

It may be understood that, in some special scenarios, when picture content that is being projected remains static or changes slightly, the encoder repeatedly outputs a previous frame of data. The repeated data has little impact on subjective experience of a user, but increases unnecessary WiFi link burden, causing increased power consumption. In the solution of this application, when it is determined that a frame of image meets a frame discarding condition, the repeated frame of image may be discarded, that is, the repeated frame of image does not need to be transmitted. In this way, Wi-Fi link burden generated during screen projection can be reduced, thereby reducing power consumption.

The first to-be-projected data may be data processed by an encoder.

In some possible implementations, the screen projection source device is a mobile phone, the screen projection destination device is an in-vehicle infotainment, and the first application is a navigation application. For example, when the mobile phone projects a screen onto the in-vehicle infotainment, a map navigation application is usually displayed on the in-vehicle infotainment side. When a vehicle brakes or stops, a navigation interface basically remains static or changes slightly, and the encoder repeatedly outputs a previous frame of data. The repeated data has little impact on subjective experience of a user, and therefore, a repeated frame of image may be deleted.

In some possible implementations, that the screen projection source device performs a preset algorithm for each frame of image in the first to-be-projected data includes: When the screen projection source device identifies that a current screen projection scenario is a preset screen projection scenario, the screen projection source device performs the preset algorithm for each frame of image in the first to-be-projected data.

During screen projection, when it is identified that a current scenario is a specific screen projection scenario (for example, a scenario of in-vehicle infotainment screen projection), and a subscribed application corresponding to the specific screen projection scenario is displayed in a foreground of a screen projection destination end, a frame of image in to-be-projected data may be determined. When the frame of image meets a frame discarding condition, the frame of image may be discarded and does not need to be transmitted. Because consecutive repeated frames of data may exist in the to-be-projected data in the specific screen projection scenario, a repeated frame of image may not be transmitted to reduce Wi-Fi link burden generated during screen projection, thereby reducing power consumption.

In some possible implementations, after the screen projection source device identifies that the foreground projected content of the screen projection destination device is updated to the interface of the first application, the method further includes:

When the screen projection source device determines that the first application is an application associated with the preset screen projection scenario, the screen projection source device identifies that the current screen projection scenario is the preset screen projection scenario.

In some possible implementations, that the screen projection source device performs a preset algorithm for each frame of image in the first to-be-projected data includes:

The screen projection source device performs the preset algorithm for each frame of image in the first to-be-projected data: when a similarity between an i^{th} frame of image and an (i-1)^{th} frame of image in the first to-be-projected data is greater than or equal to the preset similarity threshold, the screen projection source device starts a counter and increases the counter by 1, where i=i+1, and i is a positive integer.

The deleting a first frame of image from the first to-be-projected data when a similarity between the first frame of image and a second frame of image in the first to-be-projected data is greater than or equal to a preset similarity threshold includes:
deleting the i^{th} frame of image from the first to-be-projected data when a cumulative value of the counter is greater than a preset cumulative threshold.

The preset cumulative threshold (denoted as N) may be determined based on an actual use requirement, and N may be a positive integer. It may be understood that, for example, the preset cumulative threshold N may be 1, 5, 10, or another value.

It may be understood that, through the preset algorithm, frames of images in to-be-projected data may be determined frame by frame. If a current frame of image is the same as previous N consecutive frames of images or a similarity between the current frame of image and the previous N consecutive frames of images is greater than or equal to the preset similarity, it is considered that the current frame of image meets a frame discarding condition, and the frame of image may be discarded and does not need to be transmitted. Because consecutive repeated frames of data may exist in the to-be-projected data in the specific screen projection scenario, one or more repeated frames of images may not be transmitted to reduce Wi-Fi link burden generated during screen projection, thereby reducing power consumption.

In some possible implementations, the method further includes:
The screen projection source device compares an image frame feature of the i^{th} frame of image with an image frame feature of the (i-1)^{th} frame of image, where the image frame feature includes an image frame size and/or a frame identifier; and
when the image frame feature of the i^{th} frame of image is consistent with the image frame feature of the (i-1)^{th} frame of image, the screen projection source device determines that the similarity between the i^{th} frame of image and the (i-1)^{th} frame of image is greater than or equal to the preset similarity threshold.

In some possible implementations, the method further includes:
storing the i^{th} frame of image in the to-be-projected data queue when the similarity between the i^{th} frame of image and the (i-1)^{th} frame of image in the first to-be-projected data is less than the preset similarity threshold; or
storing the i^{th} frame of image in the to-be-projected data queue when the cumulative value of the counter is less than the preset cumulative threshold.

The second to-be-projected data includes the to-be-projected data queue.

It may be understood that, through the preset algorithm, frames of images in to-be-projected data may be determined frame by frame. If a similarity between a current frame of image and previous N consecutive frames of images is less than the preset similarity, it is considered that the current frame of image does not meet a frame discarding condition, and the frame of image is not discarded and needs to be transmitted, to ensure that a projected picture has sharpness that meets a user requirement.

In some possible implementations, the method further includes: resetting the counter when the similarity between the i^{th} frame of image and the (i-1)^{th} frame of image in the first to-be-projected data is less than the preset similarity threshold, where i=i+1.

It may be understood that, when a similarity between frame features of two consecutive frames of images is relatively low, it may be considered that an image feature changes greatly, and a frame discarding condition is not met, and the counter may be reset to start counting again.

For example, it is assumed that the preset cumulative threshold N is 2. Correspondingly, the frame discarding condition may be set as follows: A current frame of image is the same as previous two consecutive frames of images. When the cumulative value of the counter is greater than 2, the current frame is discarded when the current frame of image meets the frame discarding condition. Specifically, frames of images in to-be-projected data are determined frame by frame.

A first frame may not be determined, and the first frame of image is stored in the to-be-projected data queue.

Then, an image frame feature of a second frame of image is compared with an image frame feature of the first frame of image. When an image frame size of the second frame of image is consistent with an image frame size of the first frame of image, and an image frame flag Flag of the second frame of image is consistent with an image frame flag Flag of the first frame of image, it may be determined that a similarity between the second frame of image and the first frame of image is greater than or equal to the preset similarity threshold. Correspondingly, the counter is increased by 1, and the cumulative value of the counter is 1.

It may be found that the cumulative value 1 of the counter is less than the preset cumulative threshold 2, and it may be determined that the current second frame of image meets a condition of not discarding a frame. Therefore, the current second frame of image is not discarded, and the second frame of image is stored in the to-be-projected data queue.

Then, an image frame feature of a third frame of image is compared with the image frame feature of the second frame of image. When an image frame size of the third frame of image is consistent with the image frame size of the second frame of image, and an image frame flag Flag of the third frame of image is consistent with the image frame flag Flag of the second frame of image, it may be determined that a similarity between the third frame of image and the second frame of image is greater than or equal to the preset similarity threshold. Correspondingly, the counter is increased by 1, and the cumulative value of the counter is 2.

It may be found that the cumulative value 2 of the counter is equal to the preset cumulative threshold 2, and it may be determined that the current third frame of image meets the condition of not discarding a frame. Therefore, the current third frame of image is not discarded, and the third frame of image is also stored in the to-be-projected data queue.

An image frame feature of a fourth frame of image is compared with the image frame feature of the third frame of image. When an image frame size of the fourth frame of image is consistent with the image frame size of the third frame of image, and an image frame flag Flag of the fourth frame of image is consistent with the image frame flag Flag of the third frame of image, it may be determined that a similarity between the fourth frame of image and the third frame of image is greater than or equal to the preset similarity threshold. Correspondingly, the counter is increased by 1, and the cumulative value of the counter is 3.

It may be found that the cumulative value 3 of the counter is greater than the preset cumulative threshold 2, and it may be determined that the current fourth frame of image meets the frame discarding condition. Therefore, the current fourth frame may be discarded, that is, the fourth frame of image is not stored in the to-be-projected data queue.

Then, the frames of images in the to-be-projected data continue to be determined frame by frame. An image frame feature of a fifth frame of image is compared with the image frame feature of the fourth frame of image. When an image frame size of the fifth frame of image is consistent with the image frame size of the fourth frame of image, and an image frame flag Flag of the fifth frame of image is consistent with the image frame flag Flag of the fourth frame of image, it may be determined that a similarity between the fifth frame of image and the fourth frame of image is greater than or equal to the preset similarity threshold. Correspondingly, the counter is increased by 1, and the cumulative value of the counter is 4.

It may be found that the cumulative value 4 of the counter is greater than the preset cumulative threshold 2, and it may be determined that the current fifth frame of image meets the frame discarding condition. Therefore, the current fifth frame may be discarded.

Then, the frames of images in the to-be-projected data continue to be determined frame by frame. An image frame feature of a sixth frame of image is compared with the image frame feature of the fifth frame of image. When an image frame size of the sixth frame of image is inconsistent with the image frame size of the fifth frame of image, or an image frame flag Flag of the sixth frame of image is inconsistent with the image frame flag Flag of the fifth frame of image, it may be determined that a similarity between the sixth frame of image and the fifth frame of image is less than the preset similarity threshold.

When it may be determined that the current sixth frame of image meets the condition of not discarding a frame, the current sixth frame of image is not discarded, and the sixth frame of image is stored in the to-be-projected data queue. Correspondingly, the counter is reset.

Then, the frames of images in the to-be-projected data continue to be determined frame by frame. An image frame feature of a seventh frame of image is compared with the image frame feature of the sixth frame of image. When an image frame size of the seventh frame of image is consistent with the image frame size of the sixth frame of image, and an image frame flag Flag of the seventh frame of image is consistent with the image frame flag Flag of the sixth frame of image, it may be determined that a similarity between the seventh frame of image and the sixth frame of image is greater than or equal to the preset similarity threshold. Correspondingly, the counter is increased by 1, and the cumulative value of the counter is 1.

It may be found that the cumulative value of the counter is less than 2, and it may be determined that the current seventh frame of image does not meet the frame discarding condition. Therefore, the current seventh frame of image is not discarded, and the seventh frame of image is stored in the to-be-projected data queue.

For example, the to-be-projected data queue includes the first frame, the second frame, the third frame, the sixth frame, the seventh frame, and the like. The screen projection source device may send the to-be-projected data in the to-be-projected data queue to the screen projection destination device.

By analogy, the frames of images in the to-be-projected data are determined frame by frame. When a current frame of image meets the frame discarding condition, the frame of image may be discarded and does not need to be transmitted. Because consecutive repeated frames of data may exist in the to-be-projected data in the specific screen projection scenario, a repeated frame of image may not be transmitted to reduce Wi-Fi link burden generated during screen projection, thereby reducing power consumption.

The first to-be-projected data may be data processed by an encoder.

In some possible implementations, that the screen projection source device identifies that foreground projected content of the screen projection destination device is updated to an interface of a first application includes:

The screen projection source device obtains a foreground identifier, where the foreground identifier is an identifier used to indicate an application that is running in a foreground of the screen projection destination device during screen projection; and
if the foreground identifier indicates the first application, the screen projection source device identifies that the foreground projected content of the screen projection destination device is updated to the interface of the first application.

In some possible implementations, before the screen projection source device obtains the foreground identifier, the method further includes:

In response to an operation in which a user performs, on the screen projection source device side, triggering to enable the first application, the screen projection source device controls the foreground projected content of the screen projection destination device to be updated to the interface of the first application; and
the screen projection source device updates the foreground identifier, where the updated foreground identifier is used to indicate that an application that is running in the foreground of the screen projection destination device is the first application.

In some possible implementations, before the screen projection source device obtains the foreground identifier, the method further includes:

In response to receiving a reverse control event message sent by the screen projection destination device, the screen projection source device learns that the foreground projected content of the screen projection destination device is updated to the interface of the first application; and
the screen projection source device updates the foreground identifier, where the updated foreground identifier is used to indicate the first application, and the reverse control event message is used to indicate that the user performs, on the screen projection destination device side during screen projection, triggering to switch the first application to the foreground for running.

In some possible implementations, after the receiving a reverse control event message sent by the screen projection destination device, the method further includes:

In response to the reverse control event message, the screen projection source device displays the interface of the first application on a virtual screen.

In some possible implementations, that the screen projection source device obtains first to-be-projected data corresponding to the first application includes:
The screen projection source device obtains the first to-be-projected data based on content displayed on the virtual screen.

In some possible implementations, the screen projection source device includes an application status message processing module and a frame processing module.

That the screen projection source device updates the foreground identifier includes: The application status message processing module updates the foreground identifier.

The method further includes: When the updated foreground identifier indicates the first application, the screen projection source device determines whether a monitored application list includes the first application; and if the monitored application list includes the first application, the application status message processing module sends the foreground identifier to the frame processing module.

In some possible implementations, that the screen projection source device identifies that foreground projected content of the screen projection destination device is updated to an interface of a first application includes:

The frame processing module identifies, based on the foreground identifier sent by the application status message processing module, that the foreground projected content of the screen projection destination device is updated to the interface of the first application.

In some possible implementations, the screen projection source device further includes a screen projection service module.

After the screen projection source device establishes the screen projection connection to the screen projection destination device, the method further includes:

The screen projection service module subscribes to a screen projection event of the first application from the application status message processing module, and adds the first application to the monitored application list.

The screen projection event of the first application is an event that the first application is switched to the foreground of the screen projection destination device for running during screen projection.

According to a second aspect, this application provides a to-be-projected data processing apparatus. The apparatus includes a unit configured to perform the method in the first aspect. The apparatus may correspondingly perform the method described in the first aspect. For related description of the unit in the apparatus, refer to the description in the first aspect. For brevity, details are not described herein again.

The method described in the first aspect may be implemented by hardware, or may be implemented by executing corresponding software by hardware. The hardware or the software includes one or more modules or units corresponding to the foregoing functions, for example, a processing module or unit or a display module or unit.

According to a third aspect, this application provides an electronic device. The electronic device includes a processor, and the processor is coupled to a memory. The memory is configured to store a computer program or instructions, and the processor is configured to execute the computer program or the instructions stored in the memory, so that the method in the first aspect is performed. For example, the processor is configured to execute the computer program or the instructions stored in the memory, so that the apparatus performs the method in the first aspect.

According to a fourth aspect, this application provides a computer-readable storage medium. The computer-readable storage medium stores a computer program (which may also be referred to as instructions or code) used to implement the method in the first aspect. For example, when the computer program is executed by a computer, the computer is enabled to perform the method in the first aspect.

According to a fifth aspect, this application provides a chip, including a processor. The processor is configured to read and execute a computer program stored in a memory, to perform the method in any one of the first aspect and the possible implementations of the first aspect. Optionally, the chip further includes a memory, and the memory is connected to the processor by using a circuit or a wire.

According to a sixth aspect, this application provides a chip system, including a processor. The processor is configured to read and execute a computer program stored in a memory, to perform the method in any one of the first aspect and the possible implementations of the first aspect. Optionally, the chip system further includes a memory, and the memory is connected to the processor by using a circuit or a wire.

According to a seventh aspect, this application provides a computer program product. The computer program product includes a computer program (which may also be referred to as instructions or code), and when the computer program is executed by a computer, the computer is enabled to implement the method in the first aspect.

It may be understood that, for beneficial effects of the second aspect to the seventh aspect, refer to related descriptions in the first aspect. Details are not described herein again.

### BRIEF DESCRIPTION OF DRAWINGS

FIG. 1A and FIG. 1B are schematic diagrams of application scenarios of a to-be-projected data processing method according to an embodiment of this application;
FIG. 2 is a schematic diagram of a structure of an electronic device according to an embodiment of this application;
FIG. 3 is a schematic diagram of an architecture of an operating system to which a to-be-projected data processing method is applied according to an embodiment of this application;
FIG. 4 is a schematic block diagram of a to-be-projected data processing method according to an embodiment of this application;
FIG. 5 is a first schematic flowchart of a to-be-projected data processing method according to an embodiment of this application;
FIG. 6 is a second schematic flowchart of a to-be-projected data processing method according to an embodiment of this application;
FIG. 7 is a third schematic flowchart of a to-be-projected data processing method according to an embodiment of this application;
FIG. 8A to FIG. 8E are a fourth schematic flowchart of a to-be-projected data processing method according to an embodiment of this application; and
FIG. 9 is a schematic diagram of a structure of a to-be-projected data processing apparatus according to an embodiment of this application.

### DESCRIPTION OF EMBODIMENTS

To make the objectives, technical solutions, and advantages of embodiments of this application clearer, the following clearly and completely describes the technical solutions in embodiments of this application with reference to the accompanying drawings in embodiments of this application. Apparently, the described embodiments are some rather than all of embodiments of this application. Based on embodiments of this application, all other embodiments obtained by a person of ordinary skill in the art without creative efforts fall within the protection scope of this application.

The terms "first", "second", and the like in the specification and the claims in this specification are used to distinguish between different objects, and are not used to describe a specific sequence of the objects. The words such as "example" or "for example" are used to represent giving an example, an illustration, or description. Any embodiment or design solution described as "example" or "for example" in the embodiments of this application should not be construed as being more preferred or advantageous than other embodiments or design solutions. Exactly, the words such as "example" or "for example" are used to present related concepts in a specific manner.

Unless otherwise specified, "/" in this specification represents an "or" relationship between associated objects. For example, A/B may represent A or B. The term "and/or" is merely used to describe an association relationship between associated objects, and indicates that three relationships may exist. For example, "A and/or B" may indicate the following three cases: Only A exists, both A and B exist, and only B exists. In addition, in the descriptions of this application, "a plurality of' means two or more.

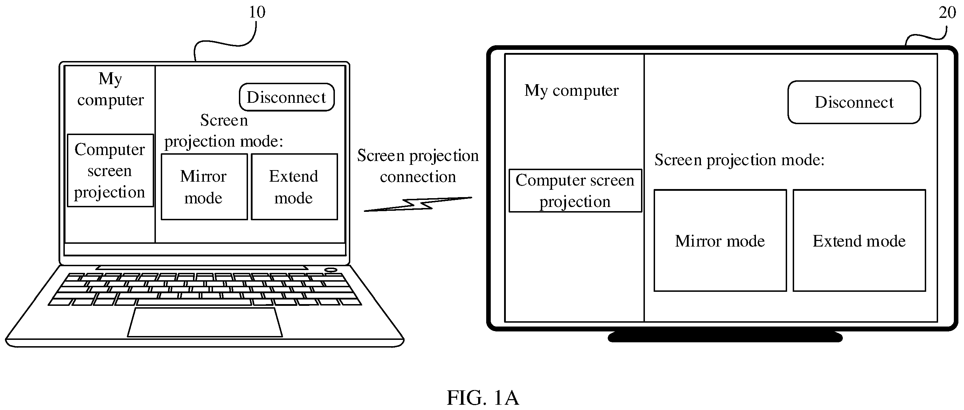

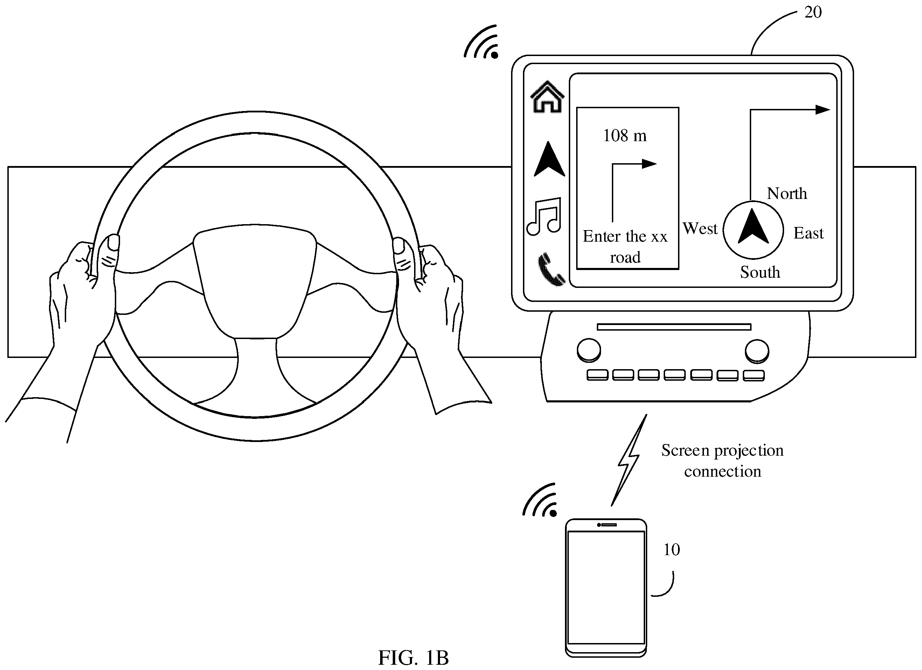

FIG. 1Aand FIG. 1B are schematic diagrams of system architectures related to example embodiments of this application. As shown in FIG. 1A and FIG. 1B, the system architecture includes a screen projection source device 10 and a screen projection destination device 20. A wireless connection may be established and maintained between the screen projection source device 10 and the screen projection destination device 20 through a wireless communication technology. When the screen projection source device 10 and the screen projection destination device 20 are located in a same local area network, the screen projection source device 10 may initiate screen projection to the screen projection destination device 20.

For example, it is assumed that both the screen projection source device 10 and the screen projection destination device 20 are in a power-on state and are located in a same local area network (for example, a Wi-Fi network). After the screen projection source device 10 enables a screen projection function, the screen projection source device 10 may search for all devices that support screen projection. After the screen projection source device 10 discovers the screen projection destination device 20, the screen projection source device 10 may negotiate, based on a screen projection protocol, with the screen projection destination device 20 for screen projection. After completing the negotiation, the screen projection source device 10 may project content displayed on a screen of the screen projection source device 10 onto a screen of the screen projection destination device 20 for display.

The screen projection source device 10 may be an electronic device such as a mobile phone, a notebook computer, a tablet computer, or a personal computer (personal computer, PC), and the screen projection destination device 20 may be an electronic device with a display such as a smart television, a tablet computer, or an in-vehicle infotainment. A device type of an electronic device in a communication system is not specifically limited in this embodiment of this application.

For example, as shown in FIG. 1A, the screen projection source device 10 is a notebook computer, and the screen projection destination device 20 is a smart television. A computer manager application (application, APP) may be installed in the notebook computer 10. The screen projection service module may include a computer screen projection function option used to establish a screen projection connection between devices. In response to an operation performed by a user in the screen projection service module, the notebook computer 10 may complete screen projection from the notebook computer 10 to the smart television 20.

For another example, as shown in FIG. 1B, the screen projection source device 10 is a mobile phone, and the screen projection destination device 20 is an in-vehicle infotainment. The mobile phone 10 may establish a screen projection connection to the in-vehicle infotainment 20 to implement screen projection from the mobile phone 10 to the in-vehicle infotainment 20. For example, when the screen projection connection has been established, after a navigation application is enabled on the mobile phone 10, an interface of the navigation application may be projected onto a large screen of the in-vehicle infotainment 20 for display, so that a user can view a navigation route by using the large screen of the in-vehicle infotainment, thereby improving use experience of the user.

In a screen projection scenario, a picture of a mobile phone may be projected onto a screen projection destination device. A user can view current content on the mobile phone by using a screen of the peer device to provide immersive experience for the user. The user no longer needs to pick up the mobile phone, and can further complete, on the screen projection destination device, reverse control on the mobile phone, to process a transaction on the mobile phone side.

In some special scenarios, when picture content that is being projected remains static or changes slightly, an encoder repeatedly outputs a previous frame of data. The repeated data has little impact on subjective experience of a user, but increases unnecessary Wi-Fi link burden, causing increased power consumption.

In view of the foregoing technical problem, embodiments of this application provide a to-be-projected data processing method. A scenario is identified, a frame feature is determined, and an unimportant frame is discarded, to reduce a network transmission bandwidth, thereby reducing power consumption.

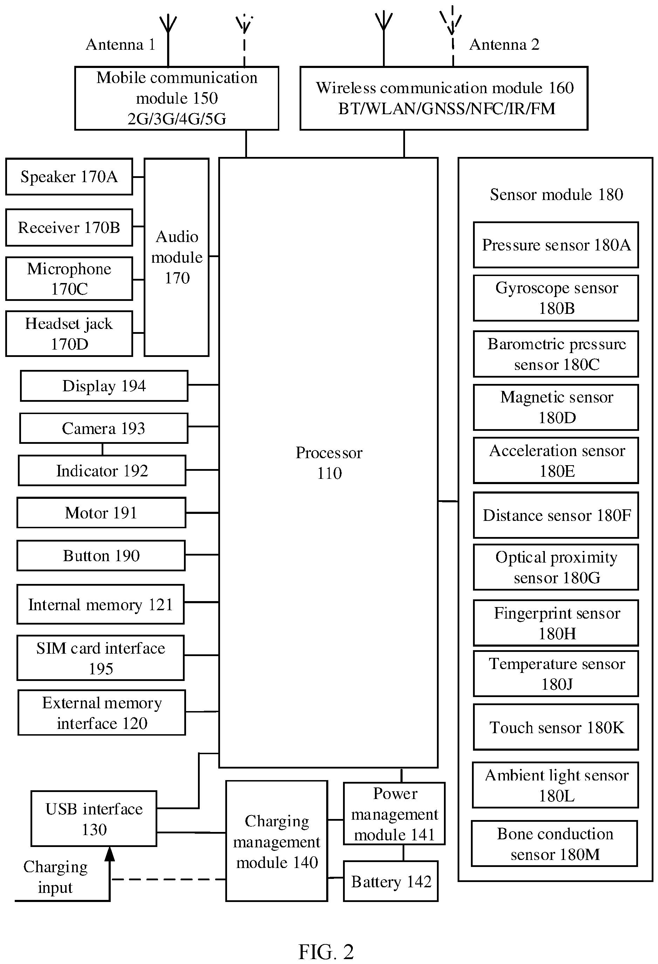

FIG. 2 is a schematic diagram of a structure of an electronic device. The electronic device may be the screen projection source device or the screen projection destination device in the foregoing embodiment. For example, the electronic device is a mobile phone. As shown in FIG. 2, the mobile phone may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include a controller, an application processor (application processor, AP), a modem processor, a graphics processing unit (graphics processing unit, GPU), an image signal processor (image signal processor, ISP), a memory, a video codec, a digital signal processor (digital signal processor, DSP), a baseband processor, a neural-network processing unit (neural-network processing unit, NPU), and/or the like. The controller may be a nerve center and a command center of the mobile phone. The controller may generate an operation control signal based on instruction operation code and a timing signal, to control instruction fetching and instruction execution. The memory may be further disposed in the processor 110, and is configured to store instructions and data. In some embodiments, the processor 110 may be specifically an ADSP. The ADSP is configured to process audio data, for example, perform sound effect processing on received voice data and perform mixing processing on a plurality of types of voice data.

A wireless communication function of the mobile phone may be implemented by using the antenna 1, the antenna 2, the mobile communication module 150, the wireless communication module 160, the modem processor, the baseband processor, and the like. The antenna 1 and the antenna 2 are configured to transmit and receive electromagnetic wave signals.

The mobile communication module 150 may provide a solution for wireless communication including 2G/3G/4G/5G and the like applied to the mobile phone. The mobile communication module 150 may include at least one filter, switch, power amplifier, low noise amplifier (low noise amplifier, LNA), and the like. In some embodiments, the mobile communication module 150 may receive an electromagnetic wave from another device by using the antenna 1, perform processing such as filtering or amplification on the electromagnetic wave, and transmit a processed electromagnetic wave to the modem processor for demodulation, to obtain a remote voice signal or a remote control signal. The mobile communication module 150 may further amplify a voice signal or a control signal modulated by the modem processor, and convert the signal into an electromagnetic wave by using the antenna 1 for radiation.

The modem processor may include a modulator and a demodulator. The modulator may be configured to modulate a to-be-sent low-frequency baseband signal into a medium/highfrequency signal. The demodulator may be configured to demodulate a received electromagnetic wave signal into a low-frequency baseband signal. Then, the demodulator transfers the low-frequency baseband signal obtained through demodulation to the baseband processor for processing. The low-frequency baseband signal is processed by the baseband processor and then transferred to the application processor. The application processor outputs a sound signal through an audio device, or displays an image or a video through the display 194.

The wireless communication module 160 may provide a solution for wireless communication including a wireless local area network (wireless local area networks, WLAN) (for example, a Wi-Fi network), Bluetooth, a global navigation satellite system (global navigation satellite system, GNSS), frequency modulation (frequency modulation, FM), near field communication (near field communication, NFC), an infrared (infrared, IR) technology, and the like applied to the mobile phone. The wireless communication module 160 may be one or more devices integrating at least one communication processing module. In some embodiments, the wireless communication module 160 receives, by using the antenna 2, an electromagnetic wave from a peripheral device such as a Bluetooth headset or a Bluetooth watch, and performs processing such as frequency modulation and filtering on an electromagnetic wave signal to obtain voice data. The wireless communication module 160 may further receive a to-be-sent voice signal from the processor 110, perform frequency modulation and amplification on the signal, and convert the signal into an electromagnetic wave by using the antenna 2 for radiation, so that a peripheral device can receive the electromagnetic wave.

The mobile phone implements a display function by using the GPU, the display 194, the application processor, and the like. The GPU is a microprocessor for image processing and is connected to the display 194 and the application processor. The GPU is configured to perform mathematical and geometric computing for graphics rendering. The processor 110 may include one or more GPUs that execute program instructions to generate or change displayed information. The display 194 is configured to display an image, a video, and the like.

The mobile phone may implement an audio function, for example, voice data playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal.

The speaker 170A, also referred to as a "loudspeaker", is configured to convert an audio electrical signal into a sound signal. The mobile phone may be used to listen to a hands-free call by using the speaker 170A, that is, a call voice is played externally.

The receiver 170B, also referred to as an "earpiece", is configured to convert an audio electrical signal into a sound signal. When the mobile phone is used to answer a call or receive voice information, the receiver 170B may be put close to a human ear to receive a voice.

The microphone 170C, also referred to as a "mic" or "mike", is configured to convert a sound signal into an electrical signal. When making a call or sending voice information, a user may make a sound by approaching the mouth to the microphone 170C, to input a sound signal to the microphone 170C.

The headset jack 170D is configured to connect to a wired headset. The headset jack 170D may be the USB interface 130, may be a 3.5 mm open mobile electronic device platform (open mobile terminal platform, OMTP) standard interface, or may be a cellular telecommunications industry association of the USA (cellular telecommunications industry association of the USA, CTIA) standard interface or the like. In some embodiments, the headset jack 170D forwards an audio signal from the wired headset to the audio module 170, and forwards an audio signal from the audio module 170 to the wired headset.

The SIM card interface 195 is configured to connect to a SIM card. The SIM card may be inserted into the SIM card interface 195 or removed from the SIM card interface 195, to come into contact with or be separated from the mobile phone. A plurality of cards may be simultaneously inserted into a same SIM card interface 195. The plurality of cards may be of a same type or different types.

It may be understood that the structure shown in this embodiment of this application does not constitute a specific limitation on the mobile phone. In some other embodiments of this application, the mobile phone may include more or fewer components than those shown in the figure, or combine some components, or split some components, or have different component arrangements. The components shown in the figure may be implemented by using hardware, software, or a combination of software and hardware.

A software system of the electronic device may use a layered architecture, an event-driven architecture, a microkernel architecture, a microservice architecture, or a cloud architecture. In embodiments of this application, an Android system with a layered architecture is used as an example to describe a software structure of the electronic device 100.

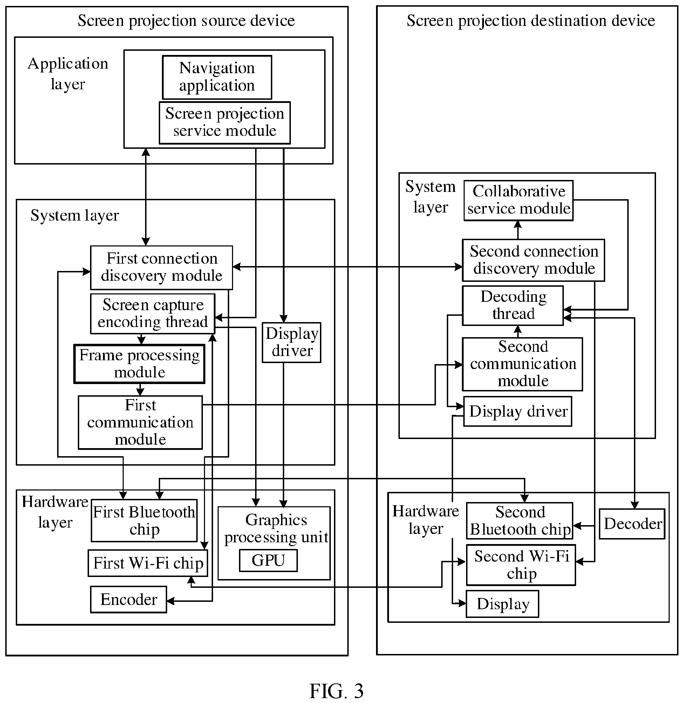

FIG. 3 is a block diagram of a software structure of an electronic device according to an embodiment of this application. In the layered architecture, software is divided into several layers, and each layer has a clear role and task. The layers communicate with each other through a software interface. As shown in FIG. 3, an application layer, a system layer, and a hardware layer are shown as examples. The application layer may include a series of application packages. For example, the application package may include applications such as Navigation and Video.

The following describes a screen projection process in embodiments of this application with reference to system architectures of a screen projection source device (for example, a mobile phone) and a screen projection destination device (for example, an in-vehicle infotainment) and a process of data exchange between modules in the system architectures. FIG. 3 is a schematic diagram of system architectures of a mobile phone and an in-vehicle infotainment.

As shown in FIG. 3, the mobile phone includes at least: a screen projection service module and a navigation application that are at an application layer; a first connection discovery module, a screen capture encoding thread, a first communication module, and a display driver that are at a system layer; and a graphics processing unit (GPU), an encoder, a first Bluetooth chip, and a first Wi-Fi chip that are at a hardware layer. The in-vehicle infotainment includes at least: a collaborative service (service) module, a second connection discovery module, a second communication module, a decoding thread, and a display driver that are at a system layer; and a decoder, a second Bluetooth chip, a second Wi-Fi chip, and a display that are at a hardware layer.

Referring to FIG. 3, after the mobile phone receives a "Connect now" screen projection operation inputted by a user, the screen projection service module sends an inter-process communication (inter-process communication, IPC) message to the first connection discovery module. Optionally, the IPC message may carry a scan indication instruction, which is used to indicate the first connection discovery module to invoke a capability of the first Bluetooth chip to scan and discover a nearby available screen projection destination device.

After receiving the IPC message, the first connection discovery module invokes the capability of the first Bluetooth chip to scan and discover a nearby available screen projection destination device. In this case, a Bluetooth chip of an available screen projection destination device may receive a scan signal of the mobile phone, and a connection discovery module of the screen projection destination device (for example, an in-vehicle infotainment) feeds back, to the first connection discovery module of the mobile phone, basic information of the screen projection destination device, such as an Internet Protocol address (internet protocol address, IP address), a media access control address (media access control address, MAC address), a universally unique identifier (universally unique identifier, UUID), a device identifier, and a device name of the screen projection destination device.

After the first connection discovery module of the mobile phone obtains, through scanning, the available screen projection destination device, the first connection discovery module can obtain the basic information of the screen projection destination device. Further, the first connection discovery module sends the basic information (such as the device name and the MAC address) of the discovered available screen projection destination device to the screen projection service module, so that the screen projection service module displays the basic information of the available screen projection destination device in an available device list to display the basic information to the user for viewing.

In some embodiments, the available device list displayed by the screen projection service module includes all devices with a Bluetooth function enabled near the mobile phone, such as an in-vehicle infotainment, a mobile phone, or a wearable device. In some other embodiments, after receiving information about all the devices with the Bluetooth function enabled, the screen projection service module may select a device that supports screen projection for display. For example, the wearable device does not support screen projection of the mobile phone, and the screen projection service module no longer displays the wearable device in the available device list.

Then, when the user taps the in-vehicle infotainment in the available device list, the screen projection service module may receive the tap operation of the user, and send an IPC message to the first connection discovery module, which is used to indicate the first connection discovery module to invoke the first Bluetooth chip to establish a Bluetooth connection (BLE connection) to the in-vehicle infotainment. Optionally, the IPC message may carry basic information of the in-vehicle infotainment. After receiving the IPC message, the first connection discovery module may invoke the capability of the first Bluetooth chip to establish the Bluetooth connection to the second Bluetooth chip of the in-vehicle infotainment, to implement a communication connection, namely, the BLE connection, between the mobile phone and the in-vehicle infotainment.

After the mobile phone establishes the BLE connection to the in-vehicle infotainment, the first connection discovery module of the mobile phone invokes the first Wi-Fi chip to establish a simulated hotspot (soft access point, SoftAP), where the SoftAP has a service set identifier (service set identifier, SSID) and a password. Then, the first connection discovery module sends the SSID and the password to the second connection discovery module of the in-vehicle infotainment through an established BLE connection channel, so that the second connection discovery module invokes the second Wi-Fi chip to establish a Wi-Fi P2P connection to the mobile phone based on the received SSID and password. In addition, a socket data channel is further established between the mobile phone and the in-vehicle infotainment, which is used for subsequent mutual data transmission between the mobile phone and the in-vehicle infotainment.

It should be noted that, a type of a connection established between the mobile phone and the in-vehicle infotainment is not limited to the Bluetooth connection and the Wi-Fi P2P connection, and may alternatively be other types of connection manners, provided that data can be transmitted between the mobile phone and the in-vehicle infotainment.

As described above, the mobile phone successfully establishes a screen projection connection to the in-vehicle infotainment. The first Wi-Fi module of the mobile phone feeds back, to the first connection discovery module, a message indicating that the mobile phone successfully establishes a connection to the in-vehicle infotainment. The second Wi-Fi module of the in-vehicle infotainment notifies a screen projection framework module of a message indicating that the in-vehicle infotainment successfully establishes a connection to the mobile phone. In this way, after the mobile phone establishes the screen projection connection to the in-vehicle infotainment, the mobile phone sends image data on a display to the in-vehicle infotainment for display.

Then, the first connection discovery module of the mobile phone may feed back a connection establishment success message to the screen projection service module, where the message carries a display parameter of the in-vehicle infotainment returned by the in-vehicle infotainment, and then the screen projection service module establishes a screen capture encoding thread. After the screen capture encoding thread is created, the mobile phone may initialize the encoder at the same time.

While the first connection discovery module of the mobile phone feeds back the connection establishment success message to the screen projection service module, the second connection discovery module of the in-vehicle infotainment also feeds back a connection establishment success message to the screen projection framework module, and then the screen projection framework module creates a decoding thread and initializes the decoder.

Next, the screen capture encoding thread obtains to-be-projected data (for example, a frame of image data) from the graphics processing unit (GPU) through a Windows API interface.

It should be noted that, an image on the display of the mobile phone is obtained after the GPU draws and renders the image data and then sends the image data for display. To send the image data to the in-vehicle infotainment, the GPU may store the image data in an image queue. Optionally, an image queue may be stored in the graphics processing unit (GPU), and the image queue includes image data that needs to be displayed on the display of the mobile phone. The image data may be image data sent for display after the GPU draws and renders data that needs to be displayed on the display of the mobile phone.

In some embodiments, a preset amount (such as 6 frames) of image data may be stored in the image queue. After the screen capture encoding thread obtains a frame of image data from the image queue, the image data may be removed from the image queue and new image data may be stored in the image queue. The screen capture encoding thread may obtain a frame of image data from the image queue, and then invoke the encoder to encode the frame of image data. After a first frame of image data is encoded, the screen capture encoding thread subsequently obtains a second frame of image data and a third frame of image data for encoding, so that the process of obtaining and encoding data is continuously performed.

Optionally, the to-be-projected data may be red green blue RGB image data. After obtaining the RGB image data, the screen capture encoding thread may convert the RGB image data into an NV12 format. Then, the screen capture encoding thread invokes the encoder to compress and encode the to-be-projected data obtained after format conversion, that is, encode the to-be-projected data into image data in an H264 format, to obtain encoded to-be-projected data.

Then, the screen capture encoding thread of the mobile phone sends the encoded to-be-projected data to a frame processing module, and the frame processing module may perform the following analysis and determining on each frame of data in the encoded to-be-projected data:
The frame processing module first determines whether a monitoring thread is started. If the monitoring thread is started, the frame processing module continues to determine whether a current frame is the same as a previous frame. For example, the frame processing module determines, based on a frame flag Flag and a frame size, whether the current frame is the same as the previous frame. If a flag Flag and a frame size of the current frame are the same as those of the previous frame, the frame processing module may determine that the current frame is the same as the previous frame. Then, the frame processing module determines whether such consecutive frames reach N frames. In this way, when such consecutive frames reach N frames, it may be considered that the current frame is a repeated data frame in the to-be-projected data. Then, the frame processing module determines whether an application that is currently in a foreground of the in-vehicle infotainment is a subscribed monitored application (for example, a navigation application). When the application that is currently in the foreground of the in-vehicle infotainment is the subscribed monitored application, the repeated data frame in the to-be-projected data is discarded. It may be understood that, if the current frame is different from the previous frame, the current frame does not need to be discarded.

Then, the frame processing module of the mobile phone sends the encoded image data (to-be-projected data) to the second communication module of the in-vehicle infotainment along the socket data channel by using the first communication module. Because the mobile phone side discards the repeated data frame in the to-be-projected data in advance, an amount of transmitted to-be-projected data is correspondingly reduced. In this way, burden of a screen projection communication link can be reduced, thereby reducing power consumption.

After receiving the encoded image data, the second communication module of the in-vehicle infotainment invokes the decoder by using the decoding thread to decode the image data, and further invokes the display driver to deliver the image data to a display to be displayed, so that the display of the in-vehicle infotainment displays an image corresponding to the to-be-projected data.

In some embodiments, when the mobile phone obtains the to-be-projected data and encodes the to-be-projected data, a screen capture programming thread may be enabled. After obtaining a frame of image data, the screen capture encoding thread immediately invokes the encoder to encode the image data, and sends encoded image data to the in-vehicle infotainment for decoding and display.

After the foregoing process, a process in which the mobile phone projects displayed content (a navigation application interface) to the in-vehicle infotainment is completed.

According to the to-be-projected data processing method provided in this embodiment of this application, during screen projection, when it is identified that a subscribed application is displayed in a foreground of a screen projection destination end, a frame of image in to-be-projected data may be determined. When the frame of image meets a frame discarding condition, the frame of image may be discarded and does not need to be transmitted. Because consecutive repeated frames of data may exist in the to-be-projected data in the specific screen projection scenario, a repeated frame of image may not be transmitted to reduce Wi-Fi link burden generated during screen projection, thereby reducing power consumption.

It may be understood that, in some special scenarios, when picture content that is being projected remains static or changes slightly, the encoder repeatedly outputs a previous frame of data. The repeated data has little impact on subjective experience of a user, but increases unnecessary WiFi link burden, causing increased power consumption. In the solution of this application, when it is determined that a frame of image meets a frame discarding condition, the repeated frame of image may be discarded, that is, the repeated frame of image does not need to be transmitted. In this way, Wi-Fi link burden generated during screen projection can be reduced, thereby reducing power consumption.

The to-be-projected data processing method provided in embodiments of this application may include the following steps:
(1) Establish a screen projection connection: A screen projection source device establishes a screen projection connection to a screen projection destination device. For details, refer to the foregoing description of the screen projection connection.
(2) Identify a user scenario: After the screen projection source device identifies that foreground projected content of the screen projection destination device is updated to an interface of a first application, when the screen projection source device determines that the first application is an application associated with a preset screen projection scenario, the screen projection source device identifies that a current screen projection scenario is the preset screen projection scenario.

In some possible implementations, the screen projection source device may be a mobile phone, the screen projection destination device may be an in-vehicle infotainment, and the first application is a navigation application. For example, when the mobile phone projects a screen onto the in-vehicle infotainment, a map navigation application is usually displayed on the in-vehicle infotainment side. When a vehicle brakes or stops, a navigation interface basically remains static or changes slightly, and the encoder repeatedly outputs a previous frame of data. The repeated data has little impact on subjective experience of a user, and therefore, a repeated frame of image may be deleted.

(3) Process to-be-projected data: The screen projection source device obtains first to-be-projected data corresponding to the first application. The screen projection source device performs a preset algorithm for each frame of image in the first to-be-projected data, where the preset algorithm is: deleting a first frame of image from the first to-be-projected data when a similarity between the first frame of image and a second frame of image in the first to-be-projected data is greater than or equal to a preset similarity threshold. The second frame of image includes N consecutive frames of images preceding the first frame of image, and N is a positive integer.

The preset similarity threshold may be set based on an actual use requirement. For example, the preset similarity threshold may be 95%. If a similarity between a current frame and previous N consecutive frames of images is greater than or equal to 95%, it may be considered that the current frame meets a frame discarding condition, and therefore, the current frame may be discarded. In this way, the screen projection source device does not need to send the repeated frame to the screen projection destination device. It may be understood that, a value of the preset similarity threshold herein is an example for description. In actual implementation, the preset similarity threshold may alternatively be another value. This is not limited in this embodiment of this application.

In some embodiments, when the screen projection source device identifies that the current screen projection scenario is the preset screen projection scenario, the screen projection source device performs the preset algorithm for each frame of image in the first to-be-projected data.

(4) Send to-be-projected data: The screen projection source device sends second to-be-projected data to the screen projection destination device, where the second to-be-projected data is to-be-projected data obtained after the preset algorithm is performed on the first to-be-projected data. The first to-be-projected data may be data processed by an encoder.

During screen projection, when it is identified that a current scenario is a specific screen projection scenario (for example, a scenario of in-vehicle infotainment screen projection), and a subscribed application corresponding to the specific screen projection scenario is displayed in a foreground of a screen projection destination end, a frame of image in to-be-projected data may be determined. When the frame of image meets a frame discarding condition, the frame of image may be discarded and does not need to be transmitted. Because consecutive repeated frames of data may exist in the to-be-projected data in the specific screen projection scenario, a repeated frame of image may not be transmitted to reduce Wi-Fi link burden generated during screen projection, thereby reducing power consumption.

In some embodiments, for each frame of image in the first to-be-projected data, the screen projection source device may perform the preset algorithm in the following manner: When a similarity between an i^{th} frame of image and an (i-1)^{th} frame of image in the first to-be-projected data is greater than or equal to the preset similarity threshold, the screen projection source device starts a counter and increases the counter by 1, where i=i+1, and i is a positive integer; and deletes the i^{th} frame of image from the first to-be-projected data when a cumulative value of the counter is greater than a preset cumulative threshold.

The preset cumulative threshold (denoted as N) may be determined based on an actual use requirement, and N may be a positive integer. It may be understood that, for example, the preset cumulative threshold N may be 1, 5, 10, or another value.

It may be understood that, through the preset algorithm, frames of images in to-be-projected data may be determined frame by frame. If a current frame of image is the same as previous N consecutive frames of images or a similarity between the current frame of image and the previous N consecutive frames of images is greater than or equal to the preset similarity, it is considered that the current frame of image meets a frame discarding condition, and the frame of image may be discarded and does not need to be transmitted. Because consecutive repeated frames of data may exist in the to-be-projected data in the specific screen projection scenario, one or more repeated frames of images may not be transmitted to reduce Wi-Fi link burden generated during screen projection, thereby reducing power consumption.

In some embodiments, the screen projection source device compares an image frame feature of the i^{th} frame of image with an image frame feature of the (i-1)^{th} frame of image, where the image frame feature may include an image frame size and/or a frame identifier. When the image frame feature of the i^{th} frame of image is consistent with the image frame feature of the (i-1)^{th} frame of image, the screen projection source device determines that the similarity between the i^{th} frame of image and the (i-1)^{th} frame of image is greater than or equal to the preset similarity threshold.

In some embodiments, when the similarity between the i^{th} frame of image and the (i-1)^{th} frame of image in the first to-be-projected data is less than the preset similarity threshold, the i^{th} frame of image may be stored in a to-be-projected data queue. Alternatively, when the cumulative value of the counter is less than the preset cumulative threshold, the i^{th} frame of image may be stored in the to-be-projected data queue. The second to-be-projected data includes the to-be-projected data queue.

It may be understood that, through the preset algorithm, frames of images in to-be-projected data may be determined frame by frame. If a similarity between a current frame of image and previous N consecutive frames of images is less than the preset similarity, it is considered that the current frame of image does not meet a frame discarding condition, and the frame of image is not discarded and needs to be transmitted, to ensure that a projected picture has sharpness that meets a user requirement.

In some embodiments, the counter is reset when the similarity between the i^{th} frame of image and the (i-1)^{th} frame of image in the first to-be-projected data is less than the preset similarity threshold, where i=i+1. It may be understood that, when a similarity between frame features of two consecutive frames of images is relatively low, it may be considered that an image feature changes greatly, and a frame discarding condition is not met, and the counter may be reset to start counting again.

For example, it is assumed that the preset cumulative threshold N is 2. Correspondingly, the frame discarding condition may be set as follows: A current frame of image is the same as previous two consecutive frames of images. When the cumulative value of the counter is greater than 2, the current frame is discarded when the current frame of image meets the frame discarding condition. Specifically, frames of images in to-be-projected data are determined frame by frame.

A first frame may not be determined, and the first frame of image is stored in the to-be-projected data queue.

Then, an image frame feature of a second frame of image is compared with an image frame feature of the first frame of image. When an image frame size of the second frame of image is consistent with an image frame size of the first frame of image, and an image frame flag Flag of the second frame of image is consistent with an image frame flag Flag of the first frame of image, it may be determined that a similarity between the second frame of image and the first frame of image is greater than or equal to the preset similarity threshold. Correspondingly, the counter is increased by 1, and the cumulative value of the counter is 1.

It may be found that the cumulative value 1 of the counter is less than the preset cumulative threshold 2, and it may be determined that the current second frame of image meets a condition of not discarding a frame. Therefore, the current second frame of image is not discarded, and the second frame of image is stored in the to-be-projected data queue.

Then, an image frame feature of a third frame of image is compared with the image frame feature of the second frame of image. When an image frame size of the third frame of image is consistent with the image frame size of the second frame of image, and an image frame flag Flag of the third frame of image is consistent with the image frame flag Flag of the second frame of image, it may be determined that a similarity between the third frame of image and the second frame of image is greater than or equal to the preset similarity threshold. Correspondingly, the counter is increased by 1, and the cumulative value of the counter is 2.

It may be found that the cumulative value 2 of the counter is equal to the preset cumulative threshold 2, and it may be determined that the current third frame of image meets the condition of not discarding a frame. Therefore, the current third frame of image is not discarded, and the third frame of image is also stored in the to-be-projected data queue.

An image frame feature of a fourth frame of image is compared with the image frame feature of the third frame of image. When an image frame size of the fourth frame of image is consistent with the image frame size of the third frame of image, and an image frame flag Flag of the fourth frame of image is consistent with the image frame flag Flag of the third frame of image, it may be determined that a similarity between the fourth frame of image and the third frame of image is greater than or equal to the preset similarity threshold. Correspondingly, the counter is increased by 1, and the cumulative value of the counter is 3.

It may be found that the cumulative value 3 of the counter is greater than the preset cumulative threshold 2, and it may be determined that the current fourth frame of image meets the frame discarding condition. Therefore, the current fourth frame may be discarded, that is, the fourth frame of image is not stored in the to-be-projected data queue.

Then, the frames of images in the to-be-projected data continue to be determined frame by frame. An image frame feature of a fifth frame of image is compared with the image frame feature of the fourth frame of image. When an image frame size of the fifth frame of image is consistent with the image frame size of the fourth frame of image, and an image frame flag Flag of the fifth frame of image is consistent with the image frame flag Flag of the fourth frame of image, it may be determined that a similarity between the fifth frame of image and the fourth frame of image is greater than or equal to the preset similarity threshold. Correspondingly, the counter is increased by 1, and the cumulative value of the counter is 4.

Alternatively, when the fourth frame meets the frame discarding condition, another processing manner may be used for the fifth frame. Because the image frame feature of the third frame of image is the same as that of the fourth frame of image, the image frame feature of the fifth frame of image may be compared with the image frame feature of the third frame of image. When the image frame size of the fifth frame of image is consistent with the image frame size of the third frame of image, and the image frame flag Flag of the fifth frame of image is consistent with the image frame flag Flag of the third frame of image, it may be determined that a similarity between the fifth frame of image and the third frame of image is greater than or equal to the preset similarity threshold. Correspondingly, the counter is increased by 1, and the cumulative value of the counter is 4. It should be noted that, the result of comparing the image frame feature of the fifth frame of image with the image frame feature of the fourth frame of image is the same as the result of comparing the image frame feature of the fifth frame of image with the image frame feature of the third frame of image. Therefore, any one of the foregoing two processing manners can be selected based on an actual use requirement.

It may be found that the cumulative value 4 of the counter is greater than the preset cumulative threshold 2, and it may be determined that the current fifth frame of image meets the frame discarding condition. Therefore, the current fifth frame may be discarded.

Then, the frames of images in the to-be-projected data continue to be determined frame by frame. An image frame feature of a sixth frame of image is compared with the image frame feature of the fifth frame of image. When an image frame size of the sixth frame of image is inconsistent with the image frame size of the fifth frame of image, or an image frame flag Flag of the sixth frame of image is inconsistent with the image frame flag Flag of the fifth frame of image, it may be determined that a similarity between the sixth frame of image and the fifth frame of image is less than the preset similarity threshold.

It may be determined that the current sixth frame of image meets the condition of not discarding a frame, and therefore, the current sixth frame of image is not discarded, and the sixth frame of image may be stored in the to-be-projected data queue. Correspondingly, the counter is reset.

Then, the frames of images in the to-be-projected data continue to be determined frame by frame. An image frame feature of a seventh frame of image is compared with the image frame feature of the sixth frame of image. When an image frame size of the seventh frame of image is consistent with the image frame size of the sixth frame of image, and an image frame flag Flag of the seventh frame of image is consistent with the image frame flag Flag of the sixth frame of image, it may be determined that a similarity between the seventh frame of image and the sixth frame of image is greater than or equal to the preset similarity threshold. Correspondingly, the counter is increased by 1, and the cumulative value of the counter is 1.

It may be found that the cumulative value 1 of the counter is less than the preset cumulative threshold 2, and it may be determined that the current seventh frame of image does not meet the frame discarding condition. Therefore, the current seventh frame of image is not discarded, and the seventh frame of image is stored in the to-be-projected data queue.

For example, in this case, the to-be-projected data queue may include the first frame, the second frame, the third frame, the sixth frame, the seventh frame, and the like. The screen projection source device may send the to-be-projected data in the to-be-projected data queue to the screen projection destination device.

By analogy, the frames of images in the to-be-projected data are determined frame by frame. When a current frame of image meets the frame discarding condition, the frame of image may be discarded and does not need to be transmitted. Because consecutive repeated frames of data may exist in the to-be-projected data in the specific screen projection scenario, a repeated frame of image may not be transmitted to reduce Wi-Fi link burden generated during screen projection, thereby reducing power consumption.

It should be noted that, the foregoing process of determining the frames of images in the to-be-projected data frame by frame is an example for description. It may be understood that, in actual implementation, the frames of images in the to-be-projected data may be determined frame by frame based on an actual specific situation of each frame of image and based on the preset algorithm provided in this application.

In some embodiments, the screen projection source device may obtain a foreground identifier to determine whether the current screen projection scenario is a navigation screen projection scenario, and the foreground identifier is an identifier used to indicate an application that is running in a foreground of the screen projection destination device during screen projection. If the foreground identifier indicates the first application (a navigation application is used as an example below), the screen projection source device identifies that the foreground projected content of the screen projection destination device is updated to an interface of the navigation application, and correspondingly, the screen projection source device can identify whether the current screen projection scenario is the navigation screen projection scenario.

In some embodiments, before the screen projection source device obtains the foreground identifier, the screen projection source device controls, in response to an operation in which a user performs, on the screen projection source device side, triggering to enable the navigation application (the first application), the foreground projected content of the screen projection destination device to be updated to the interface of the navigation application. Then, the screen projection source device updates the foreground identifier, and the updated foreground identifier is used to indicate that an application that is running in the foreground of the screen projection destination device is the navigation application.

In some other embodiments, before the screen projection source device obtains the foreground identifier, the screen projection source device learns, in response to receiving a reverse control event message sent by the screen projection destination device, that the foreground projected content of the screen projection destination device is updated to the interface of the navigation application. Then, the screen projection source device updates the foreground identifier, and the updated foreground identifier is used to indicate the navigation application. The reverse control event message is used to indicate that the user performs, on the screen projection destination device side during screen projection, triggering to switch the navigation application to the foreground for running.

In some embodiments, after receiving the reverse control event message sent by the screen projection destination device, the screen projection source device displays the interface of the navigation application on a virtual screen in response to the reverse control event message.

In some embodiments, the screen projection source device obtains to-be-projected data of the navigation application based on content displayed on the virtual screen.

In some embodiments, the screen projection source device includes a screen projection service module, an application status message processing module, and a frame processing module.

After the screen projection source device establishes the screen projection connection to the screen projection destination device, the screen projection service module subscribes to a screen projection event of the navigation application from the application status message processing module, and adds the navigation application to a monitored application list. The screen projection event of the navigation application is an event that the navigation application is switched to the foreground of the screen projection destination device for running during screen projection.

In some embodiments, the application status message processing module updates the foreground identifier. When the updated foreground identifier indicates the navigation application, the screen projection source device determines whether the monitored application list includes the navigation application. If the monitored application list includes the navigation application, the application status message processing module sends the foreground identifier to the frame processing module.

In some embodiments, the frame processing module identifies, based on the foreground identifier sent by the application status message processing module, that the foreground projected content of the screen projection destination device is updated to the interface of the navigation application, and correspondingly, the frame processing module can identify whether the current screen projection scenario is the navigation screen projection scenario.

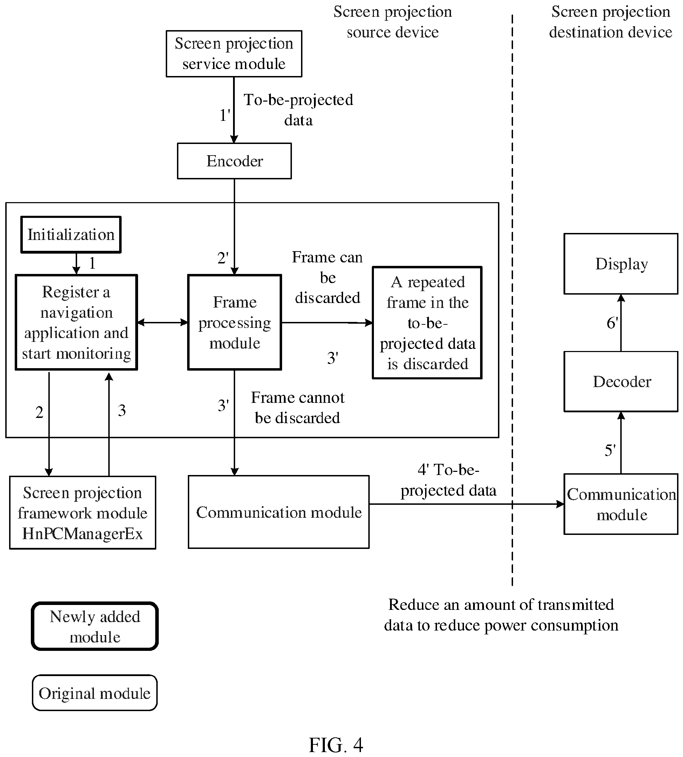

The to-be-projected data processing method provided in the embodiments of this application is described below by using an example with reference to FIG. 4. As shown in FIG. 4, a screen projection source device performs frame processing on to-be-projected data, discards a repeated frame in the to-be-projected data, and then sends processed to-be-projected data to a screen projection destination device.

As shown by data flows 1 to 3 in FIG. 4, an application such as a navigation application that needs to be monitored may be added in advance based on a situation. For example, a monitoring callback is registered with a screen projection framework module HnPCManagerEx of a mobile phone. During screen projection, when the mobile phone learns, through monitoring by using the screen projection framework module HnPCManagerEx, that the navigation application is currently running in a foreground of an in-vehicle infotainment, the mobile phone side correspondingly performs frame processing on to-be-projected data.

As shown by data flows 1' to 6' in FIG. 4, in a screen projection scenario, when it is identified that the mobile phone is in a scenario of projecting a screen onto the in-vehicle infotainment, to-be-projected data of a screen projection service module on the mobile phone side is first encoded by an encoder, and then a frame processing module analyzes and determines encoded to-be-projected data. When the to-be-projected data meets a frame discarding condition, a repeated frame in the to-be-projected data is discarded; and then, processed to-be-projected data is sent to the screen projection destination device by using a communication module on the mobile phone side. After the screen projection destination device receives the to-be-projected data by using the communication module, the to-be-projected data is decoded by a decoder, and then is displayed by using a display.

Atypical high frame rate scenario is first identified. For example, in a scenario in which a mobile phone projects a navigation interface onto a screen of an in-vehicle infotainment for display, when a vehicle brakes or stops or moves slowly, the navigation interface basically remains static or changes slightly. In this case, a large quantity of repeated frames exist in to-be-projected data. In the solution of this application, the to-be-projected data may be optimized in this scenario, and the repeated frames in the to-be-projected data are discarded to reduce Wi-Fi link burden generated during screen projection, thereby reducing power consumption.

Dynamic monitoring is performed during screen projection. When an application is switched between a foreground and a background, a switching notification may be received through registered monitoring, to perceive whether a monitored application is currently in the foreground or the background.

Common features in to-be-projected data frames are found. Through analysis of data frame features, it may be found that repeated frames generated when a picture is static have consistent sizes and consistent frame flags Flags.

A frame discarding condition may be set as follows: If current N consecutive frames are consistent, subsequently repeated frames are discarded. For example, N may be 3 or any other possible value.

A frame is directly discarded when meeting the frame discarding condition. It may be understood that the discarded data frame is no longer sent to the screen projection destination device for display. In this way, an unimportant frame is discarded to reduce a network transmission bandwidth, thereby reducing power consumption.

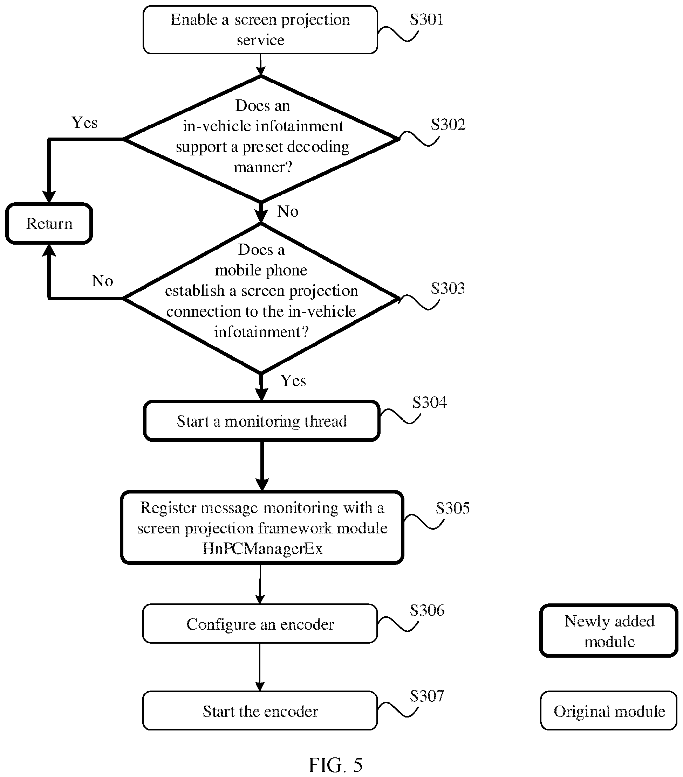

The following separately describes, with reference to FIG. 5 to FIG. 7, an initialization process, a process of monitoring foreground-background switching, and a frame processing process that are performed after a screen projection service module of a screen projection source device is started.

As shown in FIG. 5, the initialization process includes S301 to S307. When the screen projection service module is started, initialization work starts. In this case, foreground and background application listeners need to be registered. For example, a monitoring callback may be registered with a screen projection framework module HnPCManagerEx. Currently, the registration succeeds only in a scenario of in-vehicle infotainment screen projection and when an in-vehicle infotainment device does not support a preset decoding manner. After the registration is completed, an encoder is configured and the encoder is started. For example, the preset decoding manner may be a decoding manner corresponding to an H264 encoding standard.

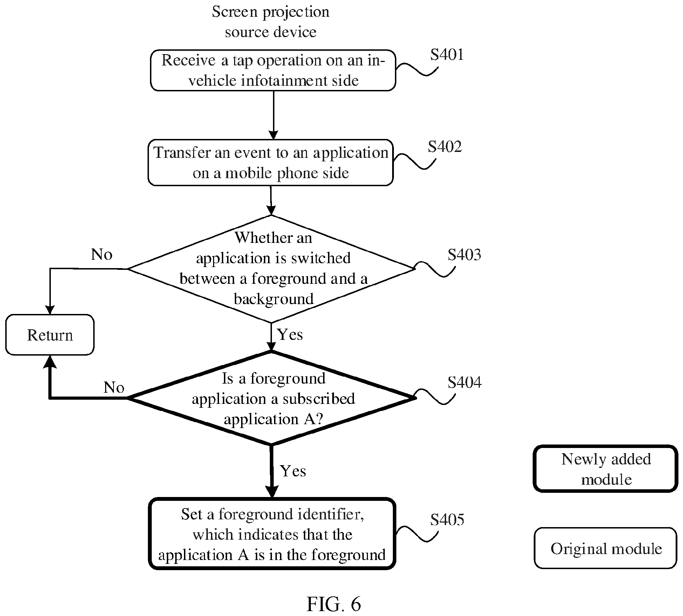

As shown in FIG. 6, the process of monitoring foreground-background switching includes S401 to S405. When a tap event occurs on an in-vehicle infotainment side, the tap event is transferred to a mobile phone side. The screen projection framework module HnPCManagerEx identifies that an application is switched between the foreground and background and calls back a registered interface to notify an application status message processing module. When receiving a foreground-background switching message, the application status message processing module determines whether a monitored application is currently in the foreground and sets a corresponding identifier.

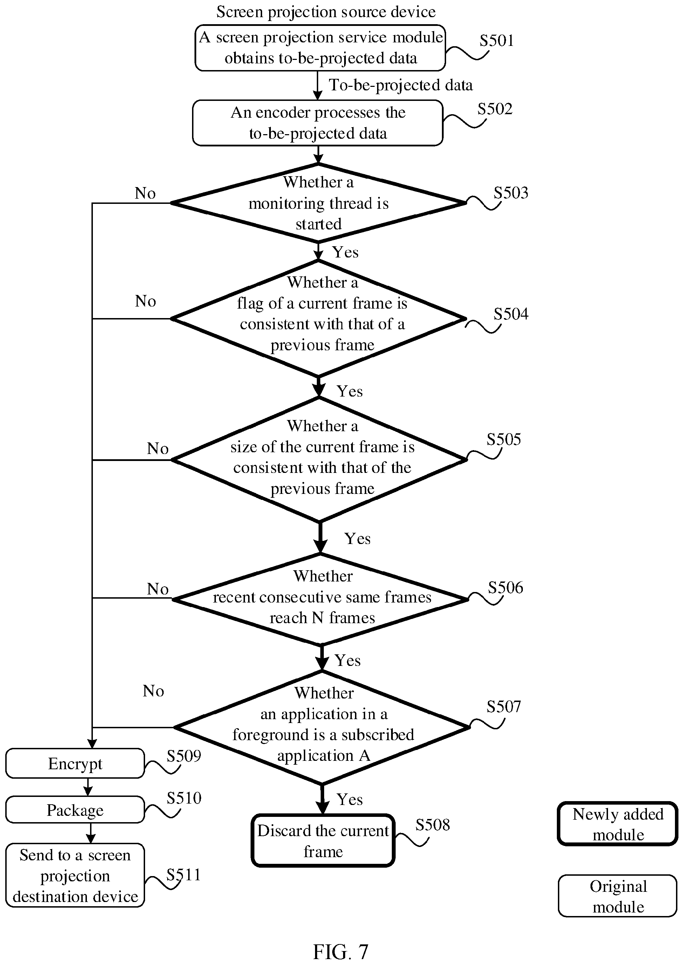

As shown in FIG. 7, the frame processing process includes S501 to S511. For each frame of data, it is first determined whether a monitoring thread is started. If the monitoring thread is started, a frame flag Flag and a frame size are consistent with those of a previous frame, and such consecutive frames reach N frames, when an application that is currently in the foreground is a monitored application, similar data frames in to-be-projected data are discarded.

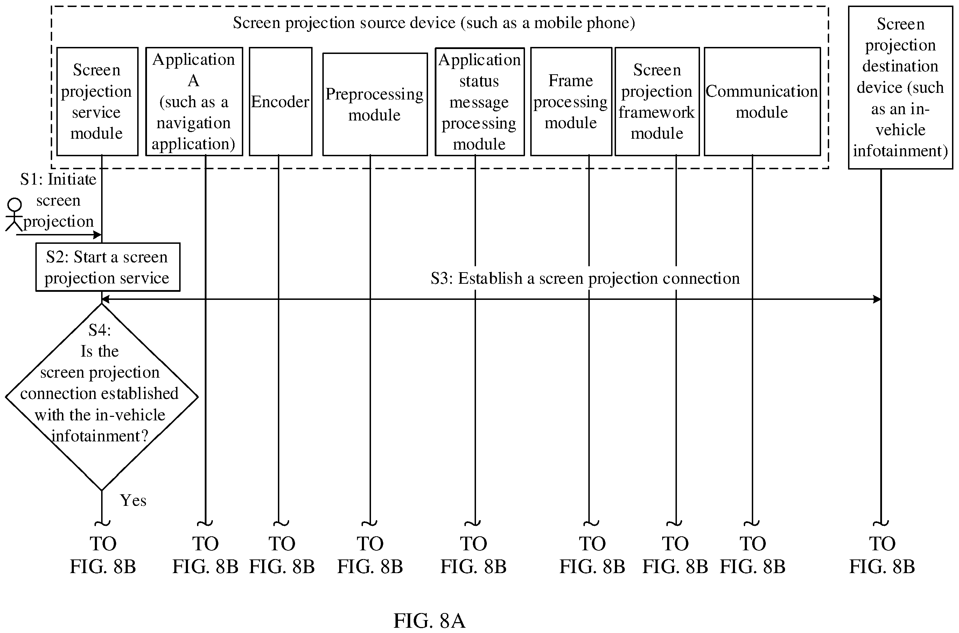

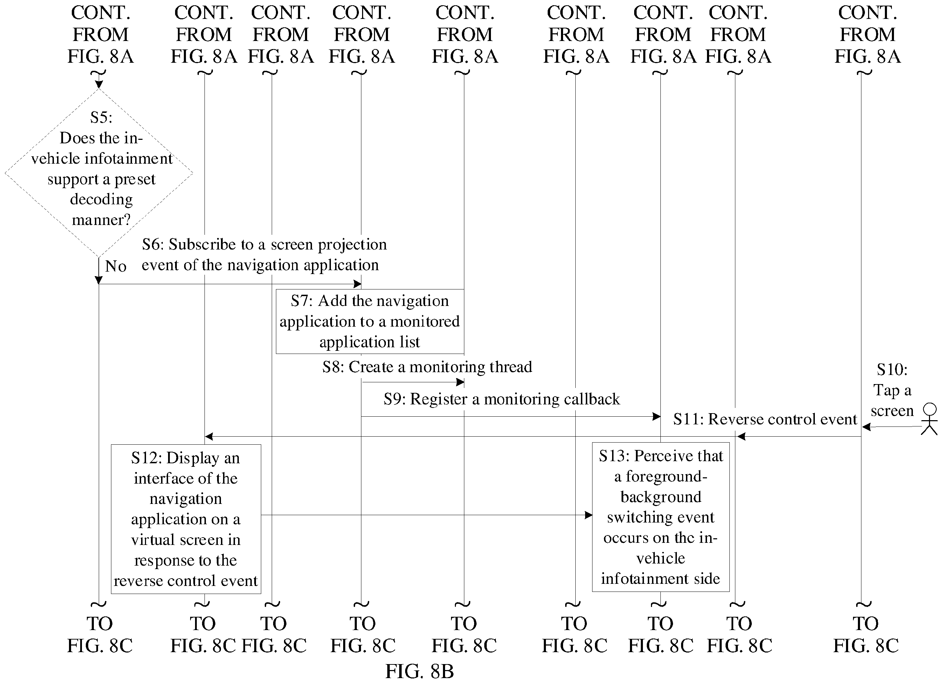

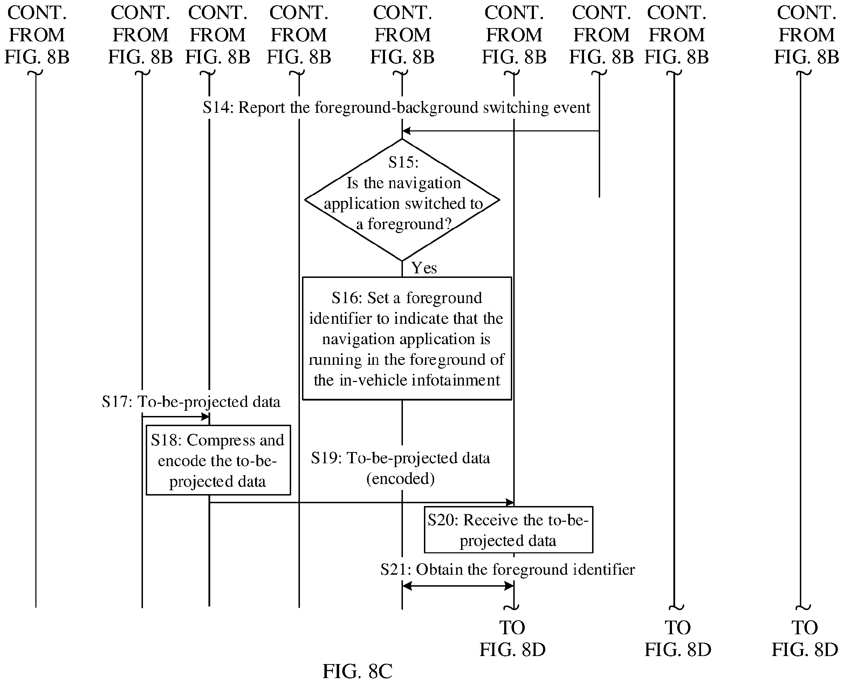

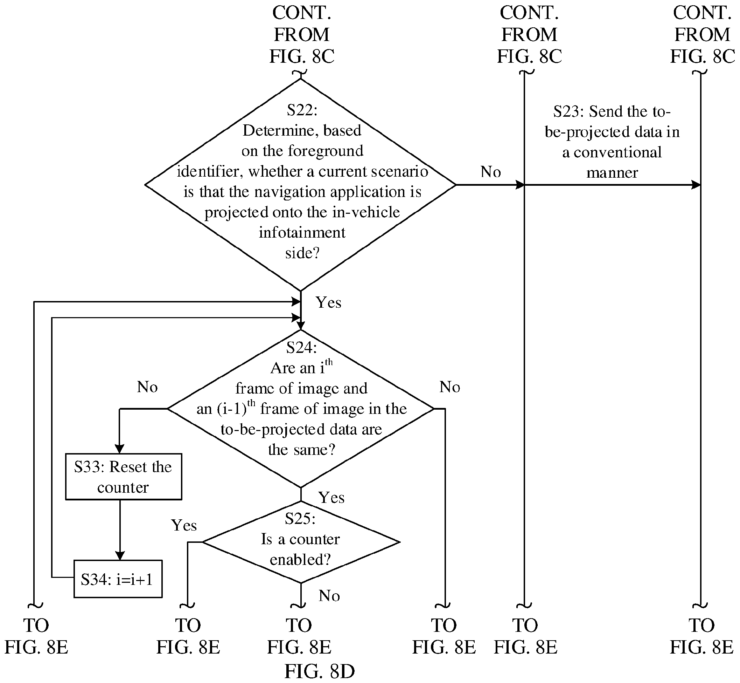

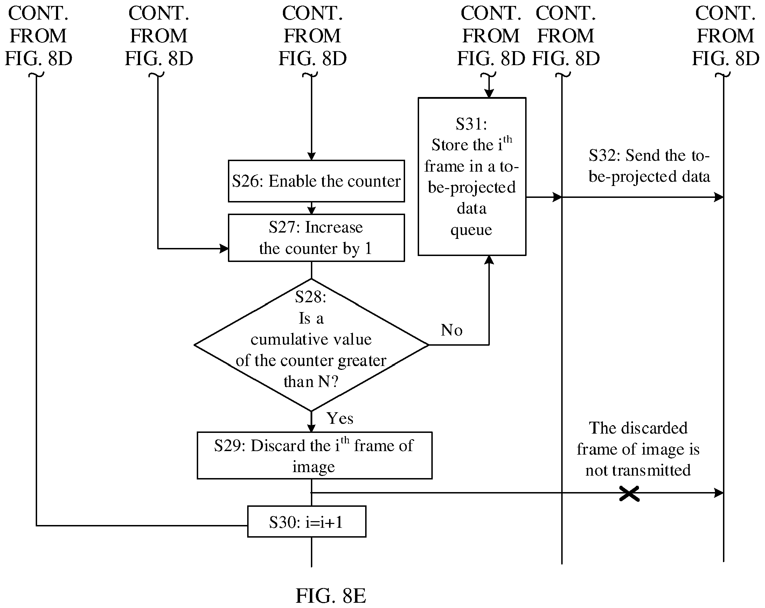

FIG. 8A to FIG. 8E generally schematically describe a sequence diagram of processing performed by modules in a screen projection source device and a screen projection destination device in a power consumption reduction method in a screen projection method according to an embodiment of this application. As shown in FIG. 8A to FIG. 8E, the sequence diagram includes S1 to S34. For ease of description, an example in which the screen projection source device is a mobile phone, the screen projection destination device is an in-vehicle infotainment, and a subscribed application is a navigation application is still used herein for example description.

S1: A screen projection service module of the mobile phone receives a screen projection initiating instruction.

The screen projection initiating instruction may be triggered by a user, or may be automatically triggered when the mobile phone and the in-vehicle infotainment meet a screen projection condition.

S2: The screen projection service module starts a screen projection service in response to the screen projection initiating instruction.

S3: The mobile phone establishes a screen projection connection to the in-vehicle infotainment by using the screen projection service module.

S4: The screen projection service module determines whether the screen projection connection is established with the in-vehicle infotainment.

When it is determined that the mobile phone establishes the screen projection connection to the in-vehicle infotainment, the following S5 continues to be performed.

S5: The screen projection service module determines whether the in-vehicle infotainment supports a preset decoding manner.

When it is determined that the in-vehicle infotainment does not support the preset decoding manner, an amount of transmitted to-be-projected data is relatively large. When it is found through monitoring that some applications (for example, a navigation application) are running in a foreground of the in-vehicle infotainment, frame processing is performed on the to-be-projected data by using the method provided in this application, and a repeated frame of image is discarded to reduce an amount of transmitted data.

When it is determined that the in-vehicle infotainment does not support the preset decoding manner, the following S6 continues to be performed.

S6: The screen projection service module subscribes to a screen projection event of the navigation application from a preprocessing module.

S7: The preprocessing module adds the navigation application to a monitored application list.

S8: The preprocessing module invokes an application status message processing module to create a monitoring thread.

S9: The preprocessing module registers a monitoring callback with a screen projection framework module HnPCManagerEx.

A service side initiates screen projection, and prepareVideoEncoder starts initialization work, sets the monitored application list, starts the monitoring thread, and registers a foreground-background switching monitoring callback with HnPCManager.

S10: The in-vehicle infotainment receives an operation of tapping a screen by a user.

In a scenario in which the mobile phone projects a screen onto the in-vehicle infotainment, when the user taps the screen of the in-vehicle infotainment, the following may be triggered: a projected interface on the mobile phone side is controlled on the in-vehicle infotainment side. This is referred to as a reverse control event.

For example, when the mobile phone projects the screen onto the in-vehicle infotainment side, the in-vehicle infotainment side displays an interface of the navigation application in the foreground in response to the operation of tapping the screen of the in-vehicle infotainment by the user; or the in-vehicle infotainment side displays a home screen of the in-vehicle infotainment in the foreground in response to the operation of tapping the screen of the in-vehicle infotainment by the user; or the in-vehicle infotainment side displays the home screen of the in-vehicle infotainment and the interface of the navigation application in the foreground through screen splitting in response to the operation of tapping the screen of the in-vehicle infotainment by the user. The reverse control event occurs in all these cases.

S 11: The in-vehicle infotainment notifies the mobile phone side of the reverse control event.

The reverse control event is used to indicate that the interface of the navigation application is switched to the foreground of the in-vehicle infotainment side for display.

S12: Display an interface of an application A (the navigation application is used as an example) on a virtual screen of the mobile phone in response to the reverse control event.

S 13: In response to the event that the application A is switched to the virtual screen, the screen projection framework module HnPCManagerEx of the mobile phone perceives that a foreground-background switching event occurs on the in-vehicle infotainment.

S14: The screen projection framework module HnPCManagerEx notifies the application status message processing module of the foreground-background switching event.

S15: The application status message processing module determines whether the navigation application is switched to the foreground of the in-vehicle infotainment.

If it is determined that the navigation application is switched to the foreground of the in-vehicle infotainment, the following S16 continues to be performed.

S16: The application status message processing module sets a foreground identifier to indicate that the navigation application is running in the foreground of the in-vehicle infotainment.

The reverse control event operated on the peer device is transferred to the mobile phone side, and an application interface is switched. After sensing a foreground-background switching action, HnPCManagerEx notifies a newly created monitoring thread through a callback. The monitoring thread receives the notification, and determines whether an application in the current monitored application list is in the foreground and stores an identifier.

S 17: The navigation application sends to-be-projected data to an encoder.

S18: The encoder compresses and encodes the to-be-projected data.

S19: The encoder sends encoded to-be-projected data to a frame processing module.

S20: The frame processing module receives the encoded to-be-projected data.

S21: The frame processing module obtains the foreground identifier from the application status message processing module.

For example, the foreground identifier indicates that the navigation application is running in the foreground of the in-vehicle infotainment.

S22: The frame processing module performs scenario identification based on the foreground identifier to determine whether a current scenario is that the navigation application is projected onto the in-vehicle infotainment side.

When it is determined that the current scenario is not that the navigation application is projected onto the in-vehicle infotainment side, the following S23 continues to be performed.

When it is determined that the current scenario is that the navigation application is projected onto the in-vehicle infotainment side, the following S24 continues to be performed.

S23: The frame processing module sends, in a conventional manner, the to-be-projected data to the in-vehicle infotainment side by using a communication module.

The conventional manner means directly sending the to-be-projected data to the in-vehicle infotainment side without performing frame processing on the to-be-projected data.

S24: The frame processing module determines whether an i^{th} frame of image and an (i-1)^{th} frame of image in the to-be-projected data are the same.

It may be understood that, that frames of images are the same herein may mean that frame sizes of two images are consistent and frame flags Flags are consistent.

If the i^{th} frame of image and the (i-1)^{th} frame in the to-be-projected data are the same, that is, a current frame of image is the same as a previous frame of image, the following S25 to S30 continue to be performed. To be specific, a quantity of consecutive same frames is counted by using a counter, and a cumulative result of the counter is compared with a preset threshold N, to determine, based on a comparison result, whether the current frame meets a frame discarding condition.

If the current frame of image is different from the previous frame of image, the following S31 and S32 continue to be performed. To be specific, the i^{th} frame of image is stored in a to-be-projected data queue, and when the to-be-projected data queue meets a preset condition, the to-be-projected data queue is combined into to-be-projected data, and the to-be-projected data is sent to the in-vehicle infotainment side.

In addition, if the current frame of image is different from the previous frame of image, the following S33 and S34 are further performed. To be specific, the counter is reset, and i=i+1 is set. Return to S24 to continue to determine the to-be-projected data frame by frame.

S25: The frame processing module determines whether a timer is enabled.

If the timer is not enabled, the following S26 and S27 continue to be performed, to be specific, the counter is enabled and the counter is increased by 1.

If the timer has been enabled, the following S27 continues to be performed, to be specific, the counter is increased by 1.

S26: Enable the counter.

S27: Increase the counter by 1.

S28: The frame processing module determines whether a cumulative value of the counter is greater than N.

N may be 3 or any other possible value.

If the cumulative value of the counter is greater than N, the following S29 continues to be performed, to be specific, the current frame of image is discarded. It may be understood that the discarded frame of image is not transmitted. In this way, the frame may be discarded to reduce power consumption.

If the cumulative value of the counter is less than or equal to N, the following S3 0 continues to be performed, to be specific, i=i+1 is set.

S29: The frame processing module discards the current frame of image.

In this case, the current frame of image meets the frame discarding condition, and does not need to be transmitted. Therefore, Wi-Fi link burden generated during screen projection is reduced, thereby reducing power consumption.

S30: Set i=i+1.

After S30, return to S24 to continue to perform the foregoing steps to continue to determine the to-be-projected data frame by frame.

When the to-be-projected data arrives and passes through a video encoder (VideoEncoder), the to-be-projected data is first detected based on a scenario such as the identifier stored in the monitoring thread and the peer device, it is further detected whether there is a repeated frame, and then a frame discarding threshold is detected. If all conditions are met, a frame is discarded; otherwise, the data is sent to the screen projection destination device.

S31: The frame processing module stores the i^{th} frame of image in the to-be-projected data queue.

The to-be-projected data queue may be combined into the to-be-projected data.

S32: The frame processing module sends the to-be-projected data to the in-vehicle infotainment side by using the communication module.

S33: Reset the counter when the current frame of image is different from the previous frame of image.

S34: Set i=i+1.

After S34, return to S24 to continue to perform the foregoing steps.

In this embodiment of this application, the frame processing module may analyze and process each frame. The following provides description by using an example.

The frame processing module receives a frame of image P1. If the frame of image P1 is the same as a previous frame of image (for example, both frame sizes and frame flags Flags are the same), the counter is increased by 1. In this case, the cumulative value of the counter is 1, which is less than the preset threshold N (for example, N is 3). Therefore, the frame of image P1 does not meet the frame discarding condition and is not discarded.

Then, the frame processing module receives a frame of image P2. If the frame of image P2 is the same as the previous frame of image P1 (for example, both frame sizes and frame flags Flags are the same), the counter is increased by 1. In this case, the cumulative value of the counter is 2, which is less than the preset threshold N. Therefore, the frame of image P2 does not meet the frame discarding condition and is not discarded.

Then, the frame processing module receives a frame of image P3. If the frame of image P3 is the same as the previous frame of image P2 (for example, both frame sizes and frame flags Flags are the same), the counter is increased by 1. In this case, the cumulative value of the counter is 3, which is equal to the preset threshold N. Therefore, the frame of image P3 does not meet the frame discarding condition and is not discarded.

Then, the frame processing module receives a frame of image P4. If the frame of image P4 is the same as the previous frame of image P3 (for example, both frame sizes and frame flags Flags are the same), the counter is increased by 1. In this case, the cumulative value of the counter is 4, which is greater than the preset threshold N. Therefore, the frame of image P4 meets the frame discarding condition and may be discarded. In other words, the frame of image P4 does not need to be transmitted to the in-vehicle infotainment side.

Then, the frame processing module receives a frame of image P5. If the frame of image P5 is the same as the previous frame of image P4 (for example, both frame sizes and frame flags Flags are the same), the counter is increased by 1. In this case, the cumulative value of the counter is 5, which is greater than the preset threshold N. Therefore, the frame of image P5 meets the frame discarding condition and may be discarded. In other words, the frame of image P5 does not need to be transmitted to the in-vehicle infotainment side.

Description continues to be provided by using an example. If the frame processing module receives a frame of image P6, and the frame of image P6 is different from the previous frame of image P5 (for example, there is a difference in either of a frame size or a frame flag Flag), the counter is reset. The frame of image P6 does not meet the frame discarding condition, and needs to be transmitted to the in-vehicle infotainment side.

Then, the frame processing module receives a frame of image P7. If the frame of image P7 is the same as the previous frame of image P6 (for example, both frame sizes and frame Flags are the same), the counter is increased by 1. In this case, the cumulative value of the counter is 1, which is less than the preset threshold N. Therefore, the frame of image P7 does not meet the frame discarding condition and is not discarded.

Then, processing may be performed in the foregoing manner. When a frame of image is the same as a previous frame of image, the counter is increased by 1. When the frame of image is different from the previous frame of image, the counter is reset.

In this embodiment of this application, during screen projection, in a specific screen projection scenario (for example, a scenario of in-vehicle infotainment screen projection), when the frame discarding condition is met, a frame may be discarded based on a picture feature of an application, and power consumption is reduced through frame discarding.

It should be noted that, the foregoing embodiment is described by using a scenario of in-vehicle infotainment screen projection as an example, to be specific, the screen projection source device is the mobile phone, the screen projection destination device is the in-vehicle infotainment, and the corresponding monitored application is the navigation application. It may be understood that, in actual implementation, the to-be-projected data processing method provided in the embodiments of this application may be further applied to another possible scenario. This may be specifically determined based on an actual use requirement, and is not limited in this embodiment of this application.

For applications in some scenarios, it may be monitored in real time whether the applications are switched to a foreground of a screen projection destination device for running.

In this embodiment of this application, a threshold of the frame discarding condition may be set based on an actual use requirement. For example, when a preset quantity of repeated frames is reached, subsequent repeated frames of data may be discarded and do not need to be transmitted.

It should also be noted that in the embodiments of this application, "greater than" may be replaced with "greater than or equal to", and "less than or equal to" may be replaced with "less than"; or "greater than or equal to" may be replaced with "greater than", and "less than" may be replaced with "less than or equal to".

The embodiments described in this specification may be independent solutions, or may be combined based on internal logic. These solutions all fall within the protection scope of this application.

It may be understood that, the methods and operations implemented by the electronic device in the foregoing method embodiments may also be implemented by a component (for example, a chip or a circuit) that can be used in the electronic device.

The method embodiments provided in this application are described above, and apparatus embodiments provided in this application are described below. It should be understood that description of the apparatus embodiments corresponds to the description of the method embodiments. Therefore, for content that is not described in detail, refer to the foregoing method embodiments. For brevity, details are not described herein again.

The solutions provided in the embodiments of this application are mainly described above from a perspective of a method step. It may be understood that, to implement the foregoing functions, the electronic device implementing the method includes corresponding hardware structures and/or software modules for performing the functions. A person skilled in the art may be aware that the example units and algorithm steps described with reference to the embodiments disclosed in this specification can be implemented in this application by using hardware or a combination of hardware and computer software. Whether a function is performed by hardware or by driving hardware by using computer software depends on particular applications and design constraints of the technical solutions. A skilled person may use different methods to implement the described functions for each particular application, but it should not be considered that the implementation goes beyond the protection scope of this application.

In the embodiments of this application, the electronic device may be divided into functional modules based on the foregoing method examples. For example, each functional module may be obtained through division for a corresponding function, or two or more functions may be integrated into one processing module. The integrated module may be implemented in a form of hardware, or may be implemented in a form of a software functional module. It should be noted that in the embodiments of this application, module division is an example, and is merely logical function division. In actual implementation, there may be another division manner. An example in which each functional module is obtained through division for each corresponding function is used below for description.

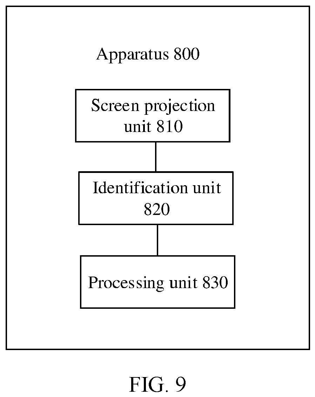

FIG. 9 is a schematic block diagram of a to-be-projected data processing apparatus 800 according to an embodiment of this application. The apparatus 800 may be configured to perform actions performed by the screen projection source device in the foregoing method embodiments. The apparatus 800 includes a screen projection unit 810, an identification unit 820, and a processing unit 830.

The screen projection unit 810 is configured to establish a screen projection connection between a screen projection source device and a screen projection destination device.

The identification unit 820 is configured to identify that foreground projected content of the screen projection destination device is updated to an interface of a first application.

The processing unit 830 is configured to: obtain first to-be-projected data corresponding to the first application, and perform, by the screen projection source device, a preset algorithm for each frame of image in the first to-be-projected data.

The preset algorithm is as follows: When a similarity between a first frame of image and a second frame of image in the first to-be-projected data is greater than or equal to a preset similarity threshold, the first frame of image is deleted from the first to-be-projected data. The second frame of image includes N consecutive frames of images preceding the first frame of image, and N is a positive integer.

The screen projection unit 810 is further configured to send second to-be-projected data to the screen projection destination device, where the second to-be-projected data is to-be-projected data obtained after the preset algorithm is performed on the first to-be-projected data.

According to the to-be-projected data processing method provided in this embodiment of this application, during screen projection, when it is identified that a subscribed application is displayed in a foreground of a screen projection destination end, a frame of image in to-be-projected data may be determined. When the frame of image meets a frame discarding condition, the frame of image may be discarded and does not need to be transmitted. Because consecutive repeated frames of data may exist in the to-be-projected data in the specific screen projection scenario, a repeated frame of image may not be transmitted to reduce Wi-Fi link burden generated during screen projection, thereby reducing power consumption.

The first to-be-projected data may be data processed by an encoder.

It may be understood that, in some special scenarios, when picture content that is being projected remains static or changes slightly, the encoder repeatedly outputs a previous frame of data. The repeated data has little impact on subjective experience of a user, but increases unnecessary WiFi link burden, causing increased power consumption. In the solution of this application, when it is determined that a frame of image meets a frame discarding condition, the repeated frame of image may be discarded, that is, the repeated frame of image does not need to be transmitted. In this way, Wi-Fi link burden generated during screen projection can be reduced, thereby reducing power consumption.

The first to-be-projected data may be data processed by an encoder.

In some possible implementations, the screen projection source device is a mobile phone, the screen projection destination device is an in-vehicle infotainment, and the first application is a navigation application. For example, when the mobile phone projects a screen onto the in-vehicle infotainment, a map navigation application is usually displayed on the in-vehicle infotainment side. When a vehicle brakes or stops, a navigation interface basically remains static or changes slightly, and the encoder repeatedly outputs a previous frame of data. The repeated data has little impact on subjective experience of a user, and therefore, a repeated frame of image may be deleted.

In some possible implementations, the processing unit 830 is specifically configured to perform the preset algorithm for each frame of image in the first to-be-projected data when the identification unit 820 identifies that a current screen projection scenario is a preset screen projection scenario.

During screen projection, when it is identified that a current scenario is a specific screen projection scenario (for example, a scenario of in-vehicle infotainment screen projection), and a subscribed application corresponding to the specific screen projection scenario is displayed in a foreground of a screen projection destination end, a frame of image in to-be-projected data may be determined. When the frame of image meets a frame discarding condition, the frame of image may be discarded and does not need to be transmitted. Because consecutive repeated frames of data may exist in the to-be-projected data in the specific screen projection scenario, a repeated frame of image may not be transmitted to reduce Wi-Fi link burden generated during screen projection, thereby reducing power consumption.

In some possible implementations, the identification unit 820 is further configured to:
after identifying that the foreground projected content of the screen projection destination device is updated to the interface of the first application, when determining that the first application is an application associated with the preset screen projection scenario, identify that the current screen projection scenario is the preset screen projection scenario.

In some possible implementations, the processing unit 830 is specifically configured to:
perform the preset algorithm for each frame of image in the first to-be-projected data: when a similarity between an i^{th} frame of image and an (i-1)^{th} frame of image in the first to-be-projected data is greater than or equal to the preset similarity threshold, start a counter and increase the counter by 1, where i=i+1, and i is a positive integer; and
delete the i^{th} frame of image from the first to-be-projected data when a cumulative value of the counter is greater than a preset cumulative threshold.

The preset cumulative threshold (denoted as N) may be determined based on an actual use requirement, and N may be a positive integer. It may be understood that, for example, the preset cumulative threshold N may be 1, 5, 10, or another value.

It may be understood that, through the preset algorithm, frames of images in to-be-projected data may be determined frame by frame. If a current frame of image is the same as previous N consecutive frames of images or a similarity between the current frame of image and the previous N consecutive frames of images is greater than or equal to the preset similarity, it is considered that the current frame of image meets a frame discarding condition, and the frame of image may be discarded and does not need to be transmitted. Because consecutive repeated frames of data may exist in the to-be-projected data in the specific screen projection scenario, one or more repeated frames of images may not be transmitted to reduce Wi-Fi link burden generated during screen projection, thereby reducing power consumption.

In some possible implementations, the processing unit 830 is further configured to:
compare an image frame feature of the i^{th} frame of image with an image frame feature of the (i-1)^{th} frame of image, where the image frame feature includes an image frame size and/or a frame identifier; and
when the image frame feature of the i^{th} frame of image is consistent with the image frame feature of the (i-1)^{th} frame of image, determine that the similarity between the i^{th} frame of image and the (i-1)^{th} frame of image is greater than or equal to the preset similarity threshold.

In some possible implementations, the processing unit 830 is specifically configured to:
store the i^{th} frame of image in the to-be-projected data queue when the similarity between the i^{th} frame of image and the (i-1)^{th} frame of image in the first to-be-projected data is less than the preset similarity threshold; or
store the i^{th} frame of image in the to-be-projected data queue when the cumulative value of the counter is less than the preset cumulative threshold.

The second to-be-projected data includes the to-be-projected data queue.

It may be understood that, through the preset algorithm, frames of images in to-be-projected data may be determined frame by frame. If a similarity between a current frame of image and previous N consecutive frames of images is less than the preset similarity, it is considered that the current frame of image does not meet a frame discarding condition, and the frame of image is not discarded and needs to be transmitted, to ensure that a projected picture has sharpness that meets a user requirement.

In some possible implementations, the processing unit 830 is specifically configured to reset the counter when the similarity between the i^{th} frame of image and the (i-1)^{th} frame of image in the first to-be-projected data is less than the preset similarity threshold, where i=i+1.

It may be understood that, when a similarity between frame features of two consecutive frames of images is relatively low, it may be considered that an image feature changes greatly, and a frame discarding condition is not met, and the counter may be reset to start counting again.

In some possible implementations, the identification unit 820 is specifically configured to:
obtain a foreground identifier, where the foreground identifier is an identifier used to indicate an application that is running in a foreground of the screen projection destination device during screen projection; and
if the foreground identifier indicates the first application, identify that the foreground projected content of the screen projection destination device is updated to the interface of the first application.

In some possible implementations, the processing unit 830 is further configured to:
in response to an operation in which a user performs, on the screen projection source device side, triggering to enable the first application, control the foreground projected content of the screen projection destination device to be updated to the interface of the first application; and update the foreground identifier, where the updated foreground identifier is used to indicate that an application that is running in the foreground of the screen projection destination device is the first application.

In some possible implementations, the processing unit 830 is further configured to:
in response to receiving a reverse control event message sent by the screen projection destination device, learn that the foreground projected content of the screen projection destination device is updated to the interface of the first application; and update the foreground identifier, where the updated foreground identifier is used to indicate the first application, and the reverse control event message is used to indicate that the user performs, on the screen projection destination device side during screen projection, triggering to switch the first application to the foreground for running.

In some possible implementations, the apparatus 800 further includes a virtual screen. The interface of the first application is displayed on the virtual screen in response to the reverse control event message.

In some possible implementations, the processing unit 830 is specifically configured to obtain the first to-be-projected data based on content displayed on the virtual screen.

The apparatus 800 according to this embodiment of this application may correspondingly perform the methods described in the embodiments of this application. In addition, the foregoing and other operations and/or functions of the units in the apparatus 800 are respectively configured to implement corresponding procedures of the methods. For brevity, details are not described herein again.

Optionally, in some embodiments, this application provides a chip. The chip is coupled to a memory. The chip is configured to read and execute a computer program or instructions stored in the memory, to perform the methods in the foregoing embodiments.

Optionally, in some embodiments, this application provides an electronic device. The electronic device includes a chip. The chip is configured to read and execute a computer program or instructions stored in a memory, so that the methods in the foregoing embodiments are performed.

Optionally, in some embodiments, an embodiment of this application further provides a computer-readable storage medium. The computer-readable storage medium stores program code. When the computer program code is run on a computer, the computer is enabled to perform the methods in the foregoing embodiments.

Optionally, in some embodiments, an embodiment of this application further provides a computer program product. The computer program product includes computer program code. When the computer program code is run on a computer, the computer is enabled to perform the methods in the foregoing embodiments.

In the embodiments of this application, the electronic device includes a hardware layer, an operating system layer running above the hardware layer, and an application layer running above the operating system layer. The hardware layer may include hardware such as a central processing unit (central processing unit, CPU), a memory management unit (memory management unit, MMU), and a memory (also referred to as a main memory). An operating system at the operating system layer may be any one or more computer operating systems that implement service processing by using a process (process), for example, a Linux operating system, a Unix operating system, an Android operating system, an iOS operating system, or a windows operating system. The application layer may include applications such as a browser, an address book, text processing software, and instant messaging software.

A specific structure of an entity for performing the methods provided in the embodiments of this application is not specially limited in the embodiments of this application, provided that a program that records code of the methods provided in the embodiments of this application can be run to perform communication based on the methods provided in the embodiments of this application. For example, the methods provided in the embodiments of this application may be performed by an electronic device, or a functional module that is in an electronic device and that can invoke a program and execute the program.

Aspects or features of this application may be implemented as a method, an apparatus, or a product that uses standard programming and/or engineering technologies. The term "product" used in this specification may cover a computer program that can be accessed from any computer-readable component, carrier, or medium. For example, the computer-readable medium may include but is not limited to a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory device (for example, an erasable programmable read-only memory (erasable programmable read-only memory, EPROM), a card, a stick, or a key driver).

Various storage media described in this specification may represent one or more devices and/or other machine-readable media that are configured to store information. The term "machine-readable media" may include but are not limited to a radio channel and various other media that can store, include, and/or carry instructions and/or data.

It should be understood that, the processor mentioned in the embodiments of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that, the memory mentioned in the embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. As example descriptions rather than limitative descriptions, the RAM may include the following a plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

It should be further noted that, the memory described in this specification is intended to include but is not limited to these memories and any other proper types of memories.

A person of ordinary skill in the art may be aware that, example units and steps described with reference to the embodiments disclosed in this specification can be implemented by electronic hardware or a combination of computer software and electronic hardware. Whether these functions are performed in a hardware or software manner depends on particular applications and design constraints of the technical solutions. A skilled person may use different methods to implement the described functions for each particular application, but it should not be considered that the implementation goes beyond the protection scope of this application.

A person skilled in the art may clearly understand that, for the purpose of convenient and brief description, for specific working processes of the system, apparatus, and unit described above, refer to the corresponding processes in the foregoing method embodiments. Details are not described herein again.

In the several embodiments provided in this application, it should be understood that the disclosed system, apparatus, and method may be implemented in another manner. For example, the apparatus embodiment described above is merely an example. For example, the unit division is merely logical function division, and there may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate components may or may not be physically separated, and components displayed as units may or may not be physical units, that is, may be located in one place, or may be distributed on a plurality of network units. Some or all of the units may be selected based on actual requirements to achieve the objectives of the solutions in the embodiments.

In addition, functional units in the embodiments of this application may be integrated into one unit, or each of the units may exist alone physically, or two or more units may be integrated into one unit.

When the function is implemented in a form of a software functional unit and sold or used as an independent product, the function may be stored in a computer-readable storage medium. Based on such an understanding, the technical solutions of this application essentially, or the part contributing to the conventional technology, or some of the technical solutions may be implemented in a form of a computer software product. The computer software product is stored in a storage medium. The computer software product includes several instructions for instructing a computer device (which may be a personal computer, a server, a network device, or the like) to perform all or some of the steps of the methods described in the embodiments of this application. The storage medium may include but is not limited to any medium that can store program code, for example, a USB flash drive, a removable hard disk, a ROM, a RAM, a magnetic disk, or an optical disc.

Unless otherwise specified, all technical and scientific terms used in this specification have meanings the same as those commonly understood by a person skilled in the art of this application. In this application, terms used in the specification of this application are merely intended to describe objectives of specific embodiments, but are not intended to limit this application.

The foregoing descriptions are merely specific implementations of this application, and are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A to-be-projected data processing method, comprising:
establishing, by a screen projection source device, a screen projection connection to a screen projection destination device;
identifying, by the screen projection source device, that foreground projected content of the screen projection destination device is updated to an interface of a first application;
obtaining, by the screen projection source device, first to-be-projected data corresponding to the first application;
performing, by the screen projection source device, a preset algorithm for each frame of image in the first to-be-projected data, wherein the preset algorithm is: deleting a first frame of image from the first to-be-projected data when a similarity between the first frame of image and a second frame of image in the first to-be-projected data is greater than or equal to a preset similarity threshold, wherein the second frame of image comprises N consecutive frames of images preceding the first frame of image, and N is a positive integer; and
sending, by the screen projection source device, second to-be-projected data to the screen projection destination device, wherein the second to-be-projected data is to-be-projected data obtained after the preset algorithm is performed on the first to-be-projected data.

2. The method according to claim 1, wherein the performing, by the screen projection source device, a preset algorithm for each frame of image in the first to-be-projected data comprises:
when the screen projection source device identifies that a current screen projection scenario is a preset screen projection scenario, performing, by the screen projection source device, the preset algorithm for each frame of image in the first to-be-projected data.

3. The method according to claim 2, wherein after the identifying, by the screen projection source device, that foreground projected content of the screen projection destination device is updated to an interface of a first application, the method further comprises:
when the screen projection source device determines that the first application is an application associated with the preset screen projection scenario, identifying, by the screen projection source device, that the current screen projection scenario is the preset screen projection scenario.

4. The method according to any one of claims 1 to 3, wherein the performing, by the screen projection source device, a preset algorithm for each frame of image in the first to-be-projected data comprises:
performing, by the screen projection source device, the preset algorithm for each frame of image in the first to-be-projected data: when a similarity between an i^{th} frame of image and an (i-1)^{th} frame of image in the first to-be-projected data is greater than or equal to the preset similarity threshold, starting, by the screen projection source device, a counter and increasing the counter by 1, wherein i=i+1, and i is a positive integer; and
the deleting a first frame of image from the first to-be-projected data when a similarity between the first frame of image and a second frame of image in the first to-be-projected data is greater than or equal to a preset similarity threshold comprises:
deleting the i^{th} frame of image from the first to-be-projected data when a cumulative value of the counter is greater than a preset cumulative threshold.

5. The method according to claim 4, wherein the method further comprises:
comparing, by the screen projection source device, an image frame feature of the i^{th} frame of image with an image frame feature of the (i-1)^{th} frame of image, wherein the image frame feature comprises an image frame size and/or a frame identifier; and
when the image frame feature of the i^{th} frame of image is consistent with the image frame feature of the (i-1)^{th} frame of image, determining, by the screen projection source device, that the similarity between the i^{th} frame of image and the (i-1)^{th} frame of image is greater than or equal to the preset similarity threshold.

6. The method according to claim 4 or 5, wherein the method further comprises:
storing the i^{th} frame of image in the to-be-projected data queue when the similarity between the i^{th} frame of image and the (i-1)^{th} frame of image in the first to-be-projected data is less than the preset similarity threshold; or
storing the i^{th} frame of image in the to-be-projected data queue when the cumulative value of the counter is less than the preset cumulative threshold, wherein
the second to-be-projected data comprises the to-be-projected data queue.

7. The method according to any one of claims 4 to 6, wherein the method further comprises:
resetting the counter when the similarity between the i^{th} frame of image and the (i-1)^{th} frame of image in the first to-be-projected data is less than the preset similarity threshold, wherein i=i+1.

8. The method according to any one of claims 1 to 7, wherein the identifying, by the screen projection source device, that foreground projected content of the screen projection destination device is updated to an interface of a first application comprises:
obtaining, by the screen projection source device, a foreground identifier, wherein the foreground identifier is an identifier used to indicate an application that is running in a foreground of the screen projection destination device during screen projection; and
if the foreground identifier indicates the first application, identifying, by the screen projection source device, that the foreground projected content of the screen projection destination device is updated to the interface of the first application.

9. The method according to claim 8, wherein before the obtaining, by the screen projection source device, a foreground identifier, the method further comprises:
in response to an operation in which a user performs, on the screen projection source device side, triggering to enable the first application, controlling, by the screen projection source device, the foreground projected content of the screen projection destination device to be updated to the interface of the first application; and
updating, by the screen projection source device, the foreground identifier, wherein the updated foreground identifier is used to indicate that an application that is running in the foreground of the screen projection destination device is the first application.

10. The method according to claim 8 or 9, wherein before the obtaining, by the screen projection source device, a foreground identifier, the method further comprises:
in response to receiving a reverse control event message sent by the screen projection destination device, learning, by the screen projection source device, that the foreground projected content of the screen projection destination device is updated to the interface of the first application; and
updating, by the screen projection source device, the foreground identifier, wherein the updated foreground identifier is used to indicate the first application, and the reverse control event message is used to indicate that the user performs, on the screen projection destination device side during screen projection, triggering to switch the first application to the foreground for running.

11. The method according to claim 10, wherein after the receiving a reverse control event message sent by the screen projection destination device, the method further comprises:
in response to the reverse control event message, displaying, by the screen projection source device, the interface of the first application on a virtual screen.

12. The method according to claim 11, wherein the obtaining, by the screen projection source device, first to-be-projected data corresponding to the first application comprises:
obtaining, by the screen projection source device, the first to-be-projected data based on content displayed on the virtual screen.

13. The method according to any one of claims 9 to 12, wherein the screen projection source device comprises an application status message processing module and a frame processing module;
the updating, by the screen projection source device, the foreground identifier comprises:
updating, by the application status message processing module, the foreground identifier; and
the method further comprises:
when the updated foreground identifier indicates the first application, determining, by the screen projection source device, whether a monitored application list comprises the first application; and
if the monitored application list comprises the first application, sending, by the application status message processing module, the foreground identifier to the frame processing module.

14. The method according to claim 13, wherein the identifying, by the screen projection source device, that foreground projected content of the screen projection destination device is updated to an interface of a first application comprises:
identifying, by the frame processing module based on the foreground identifier sent by the application status message processing module, that the foreground projected content of the screen projection destination device is updated to the interface of the first application.

15. The method according to claim 13 or 14, wherein the screen projection source device further comprises a screen projection service module; and
after the establishing, by a screen projection source device, a screen projection connection to a screen projection destination device, the method further comprises:
subscribing, by the screen projection service module, to a screen projection event of the first application from the application status message processing module, and adding the first application to the monitored application list, wherein
the screen projection event of the first application is an event that the first application is switched to the foreground of the screen projection destination device for running during screen projection.

16. The method according to any one of claims 1 to 15, wherein the screen projection source device is a mobile phone, the screen projection destination device is an in-vehicle infotainment, and the first application is a navigation application.

17. An electronic device, comprising a processor, wherein the processor is coupled to a memory, and the processor is configured to execute a computer program or instructions stored in the memory, to enable the electronic device to implement the method according to any one of claims 1 to 16.

18. A computer-readable storage medium, wherein the computer-readable storage medium stores a computer program, and when the computer program is run in an electronic device, the electronic device is enabled to perform the method according to any one of claims 11 to 16.
